(19) Europäisches Patentamt / European Patent Office / Office européen des brevets

(11) **EP 3 904 990 B1**

(12) **EUROPEAN PATENT SPECIFICATION**

(45) Date of publication and mention
of the grant of the patent:
**31.01.2024 Bulletin 2024/05**

(21) Application number: **21165850.5**

(22) Date of filing: **30.03.2021**

(51) International Patent Classification (IPC):
***G05D 1/00*** *(2024.01)*

(52) Cooperative Patent Classification (CPC):
**G05D 1/0044;** G05D 2201/0216

(54) **TERMINAL, CONTROL SYSTEM, CONTROL METHOD, AND PROGRAM**

ENDGERÄT, STEUERUNGSSYSTEM, STEUERUNGSVERFAHREN UND PROGRAMM

TERMINAL, SYSTÈME DE COMMANDE, PROCÉDÉ DE COMMANDE ET PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.04.2020 JP 2020079461**

(43) Date of publication of application:
**03.11.2021 Bulletin 2021/44**

(73) Proprietor: **Mitsubishi Heavy Industries, Ltd.**
**Tokyo 1008332 (JP)**

(72) Inventors:
 • **TAKAO, Kenji**
   **Tokyo, 1008332 (JP)**
 • **KINOUCHI, Yusuke**
   **Tokyo, 1008332 (JP)**
 • **HASEGAWA, Noriyuki**
   **Tokyo, 1008332 (JP)**

(74) Representative: **Studio Torta S.p.A.**
**Via Viotti, 9**
**10121 Torino (IT)**

(56) References cited:
**EP-A1- 3 550 392          JP-A- 2018 043 832**
**JP-B2- 6 540 485          US-A1- 2007 061 071**
**US-A1- 2019 294 181**

• **JONG JIN PARK ET AL: "Robot navigation with
model predictive equilibrium point control",
INTELLIGENT ROBOTS AND SYSTEMS (IROS),
2012 IEEE/RSJ INTERNATIONAL CONFERENCE
ON, IEEE, 7 October 2012 (2012-10-07), pages
4945-4952, XP032288041, DOI:
10.1109/IROS.2012.6386195 ISBN:
978-1-4673-1737-5**

Processed by Luminess, 75001 PARIS (FR)

**Description**

Technical Field

The present disclosure relates to a terminal, a control system, a control method, and a program.

Background Art

Techniques for setting a movement route of a movable body, such as a forklift, is known. Patent Document 1 discloses a method including: moving to a location near a target object in a preset wide area trajectory; detecting position information of the target object by means of a range sensor provided to a forklift; and determining an approach trajectory to the target object.

Citation List

Patent Literature

Patent Document 1: JP 2017-182502 A
Patent Document 2 : EP 3 550 392.

Summary of Invention

Technical Problem

However, depending on the situation in a warehouse, a request from a package deliverer, or the like, a transport route may be desired which is different from a transport route for a target object preset or automatically generated as in Patent Document 1. Furthermore, in a case where a target object loaded on a vehicle is unloaded for example, it is difficult to recognize how the target object is loaded on the vehicle, and thus it may be difficult to preset the transport route. Furthermore, not only the transport route but also various details of work executed by the movable body, such as an order of target objects to be transported, may be desired to be different from the details of work preset or automatically determined, or may be difficult to preset in the first place.

Thus, there is a demand for appropriately setting the details of work performed by the movable body.

At least one embodiment of the present disclosure solves the above-described problem, and an object of the present disclosure is to provide a terminal, a control system, a control method, and a program with which details of work performed by a movable body can be appropriately set.

Solution to Problem

The solution to the above described problem is disclosed by a control system according to the claims.

Advantageous Effects of Invention

With the present disclosure, the details of the work performed by the movable body can be appropriately set.

Brief Description of Drawings

FIG. 1 is a schematic view of a control system according to at least one embodiment of the present disclosure.
FIG. 2 is a schematic view of a configuration of a movable body.
FIG. 3 is a schematic block diagram of a computation device.
FIG. 4 is a schematic block diagram of a control device for the movable body.
FIG. 5 is a schematic block diagram of a terminal according to at least one embodiment of the present disclosure.
FIG. 6 is a schematic view illustrating an example of a proposed transport route displayed on a display unit.
FIG. 7 is a schematic view illustrating an example of a proposed transport route displayed on the display unit.
FIG. 8 is a schematic view illustrating an example of a set transport route displayed on the display unit.

FIG. 9 is a flowchart illustrating a processing flow until the movable body starts the work.

FIG. 10 is a schematic view illustrating an example of a designated transport route displayed on the display unit.

FIG. 11 is a flowchart illustrating a processing flow for setting a set transport route while the work is in progress.

FIG. 12 is a diagram illustrating an image in a case where an order in which target objects are transported (transport order) is designated.

FIG. 13 is a diagram illustrating an image in a case where an order in which target objects are transported (transport order) is designated.

FIG. 14 is a diagram illustrating an image in a case where a transport method for a target object is designated.

FIG. 15 is a diagram illustrating an image in a case where a transport destination of a target object is designated.

FIG. 16 is a schematic view of a control system according to at least one embodiment of the present disclosure.

FIG. 17 is a schematic view illustrating an example of a proposed transport route displayed on the display unit.

FIG. 18 is a schematic view illustrating an example of a proposed transport route displayed on the display unit.

FIG. 19 is a schematic view illustrating an example of a set transport route displayed on the display unit.

Description of Embodiments

Preferred embodiments of the present invention will be described in detail below with reference to the accompanying drawings.

First Embodiment

Overall Configuration of Control System

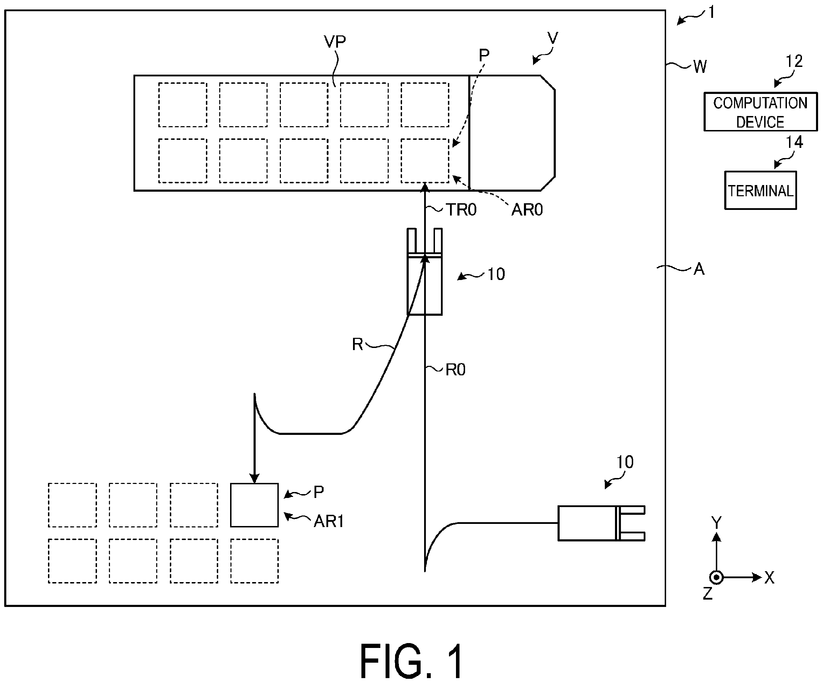

FIG. 1 is a schematic view of a control system according to at least one embodiment of the present disclosure. As illustrated in FIG. 1, the control system 1 according to a first embodiment includes a movable body 10, a computation device 12, and a terminal 14. The control system 1 is a system that controls movement of the movable body 10 that is assigned to a facility W. The facility W is a facility that is logistically managed, such as a warehouse. The movable body 10 is an automatically movable device. In the present embodiment, the movable body 10 is a forklift, and, in particular, is what is known as an automated guided forklift (AGF) or an automated guided vehicle (AGV). However, the movable body 10 is not limited to an automatically moving device, and may be, for example, a manned movable body (such as a manned forklift) that is operated by an operator. As illustrated in FIG. 1, in the example of the present embodiment, the movable body 10 picks up a target object P placed in a placement area ARC of a loading platform VP of a vehicle V, transports the target object P to a transport destination area AR1 in the facility W, and places the target object P in the transport destination area AR1. The vehicle V is a vehicle that has delivered the target object P to the facility W. The vehicle V is parked in a designated area in an area A of the facility W, for example. The target object P is a target object transported by the movable body 10, and is a pallet in the present embodiment, but may refer to a pallet and a package disposed on the pallet. The placement area ARC is an area in which the target object P to be transported is placed, and in the present embodiment is an area within the loading platform VP. The placement areas ARC are segments for respective target objects P, and one target object P is disposed in the placement area AR0. The placement areas ARC are not limited to segments for respective target objects P, and for example, may be configured so that a plurality of target objects P are placed in an area AR0. The transport destination area AR1 is an area in which the target object P transported is placed, and is set to be in the area A of the facility W in the present embodiment. In the example illustrated in FIG. 1, the transport destination areas AR1 are segments for respective target objects P, and one target object P is placed in the transport destination area AR1. The transport destination areas AR1 are not limited to segments for respective target objects P, and for example, may be configured as a free space so that a plurality of target objects P are placed in an area AR1. The present embodiment is an example where the target object P is transported and unloaded from the loading platform VP of the vehicle V. However, this should not be construed as a limitation, and the control system 1 may be applied to a case where a target object in the facility W is loaded on the loading platform VP as in a second embodiment described later. Furthermore, the control system 1 may include a warehouse management system (WMS) that manages the target object P within the facility W.

When the unloading is performed as in the present embodiment, the movable body 10 moves according to an approach route R0, toward the placement area ARC of the loading platform VP. Upon approaching the placement area AR0, the movable body 10 detects the position and the arrangement of the target object P by means of a sensor 26 described later, and calculates an approach trajectory TRO to the placement area AR0. The movable body 10 approaches the target object P placed in the placement area ARC in accordance with the approach trajectory TRO, picks up the target object P, moves toward the transport destination area AR1 in accordance with the transport route R, and unloads the target object P in the transport destination area AR1. Details of the approach route R0, the approach trajectory TRO, and the transport route R will be described later. Hereinafter, one direction along the area A is referred to as a direction X, and a direction along the area A that is orthogonal to the direction X is referred to as a direction Y. A direction orthogonal to the area A, that is, a direction orthogonal to the directions X and Y, is referred to as a direction Z. The directions X and Y may be referred to as horizontal directions, and the direction Z may be referred to as a vertical direction.

Movable Body

Next, a configuration of the movable body 10 will be described. Although only one movable body 10 is illustrated in FIG. 1, a plurality of movable bodies 10 may be assigned to the facility W, and perform the work. Furthermore, a manned movable body (such as a manned forklift) operated by an operator may be assigned.

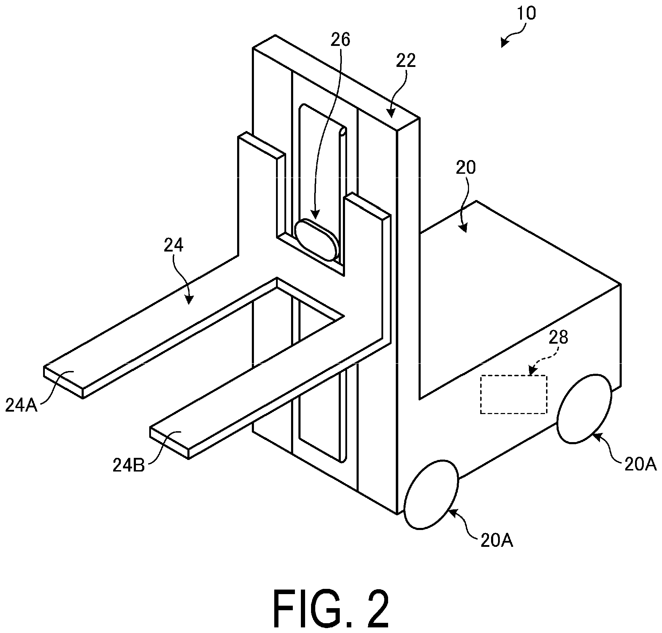

FIG. 2 is a schematic view of a configuration of the movable body. As illustrated in FIG. 2, the movable body 10 includes a vehicle body 20, a mast 22, a fork 24, a sensor 26, and a control device 28. The vehicle body 20 has wheels 20A. The mast 22 is provided at one end of the vehicle body 20 in a front-back direction. The mast 22 extends along the vertical direction (here, the direction Z) orthogonal to the front-back direction. The fork 24 is attached to the mast 22 so as to be movable in the direction Z. The fork 24 may be movable in a lateral direction of the vehicle body 20 (a direction intersecting with the vertical direction and the front-back direction) with respect to the mast 22. The fork 24 has a pair of tines 24A and 24B. The tines 24A and 24B extend, from the mast 22, toward the front direction of the vehicle body 20. The tines 24A and 24B are arranged separated from each other in the lateral direction of the mast 22. In the front-back direction, a direction to a side of the movable body 10 where the fork 24 is provided and a direction to a side where the fork 24 is not provided are respectively referred to as a first direction and a second direction.

The sensor 26 detects at least one of the position and orientation of a target object in the periphery of the vehicle body 20. In other words, the sensor 26 detects a position and an orientation of the target object relative to the movable body 10. In the present embodiment, the sensor 26 is provided to the mast 22, and detects the position and orientation of the target object on the first direction side of the vehicle body 20. However, the detection direction of the sensor 26 is not limited to the first direction, and for example, the detection may be performed on both the first direction side and the second direction side. In this case, as the sensor 26, a sensor that performs the detection on the first direction side and a sensor that performs the detection on the second direction side may be provided. The sensor 26 is a sensor that emits a laser beam, for example. The sensor 26 emits the laser beam while performing scanning in one direction (here, the lateral direction), and detects the position and orientation of the target object from the reflected light of the laser beam emitted. Note that the sensor 26 is not limited to the one described above. The sensor 26 may be a sensor that detects the target object using any method, and may be a camera, for example. Furthermore, the position at which the sensor 26 is provided is not limited to the mast 22. Specifically, for example, a safety sensor provided on the movable body 10 may also be applied as the sensor 26. With the safety sensor thus applied also for such a purpose, no new sensor needs to be provided.

The control device 28 controls movement of the movable body 10. The control device 28 will be described later.

Computation Device

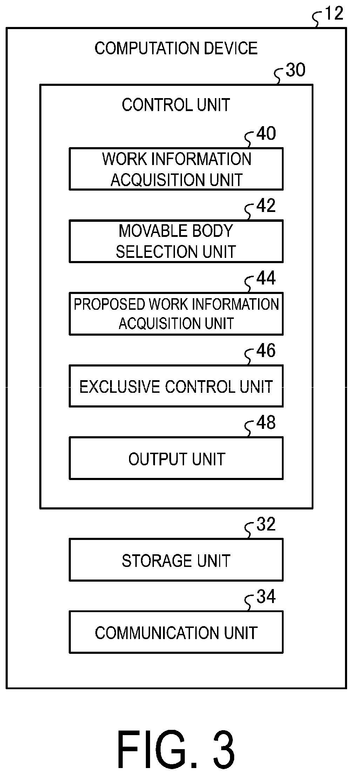

FIG. 3 is a schematic block diagram of the computation device. The computation device 12, which is a device for managing the movable body 10, calculates information and the like related to the movement of the movable body 10, and outputs the information to the movable body 10. The computation device 12 is, for example, a so-called ground system provided to the facility W, but is not necessarily provided to the facility W, and may be provided in an area separated from the facility W. The computation device 12 is a computer, and as illustrated in FIG. 3, includes a control unit 30, a storage unit 32, and a communication unit 34. The storage unit 32 is a memory for storing various types of information such as the content of calculation by the control unit 30, programs, and the like, and includes at least one of a RAM, a main storage device such as a ROM, and an external storage device such as an HDD for example. The communication unit 34 is a communication module that communicates with an external device, and is, for example, an antenna. The computation device 12 wirelessly communicates with the movable body 10 and the terminal 14, but any communication scheme may be used.

The control unit 30 is a computation device, specifically, a CPU. The control unit 30 includes a work information acquisition unit 40, a movable body selection unit 42 (an example of a selection unit), a proposed work information acquisition unit 44, an exclusive control unit 46, and an output unit 48. The control unit 30 reads and executes a program (software) from the storage unit 32 to implement the work information acquisition unit 40, the movable body selection unit 42, the proposed work information acquisition unit 44, the exclusive control unit 46, and the output unit 48, and executes the processing of those units. Note that the control unit 30 may execute such processing with a single CPU, or may include a plurality of CPUs and execute the processing with the plurality of CPUs. At least a part of the work information acquisition unit 40, the movable body selection unit 42, the proposed work information acquisition unit 44, the exclusive control unit 46, and the output unit 48 may be implemented by a hardware circuit.

The movable body selection unit 42 selects the movable body 10 to perform the work. The proposed work information acquisition unit 44 acquires proposed work information to be described later. The exclusive control unit 46 sets a prohibited route prohibiting the entry of another movable body. The output unit 48 outputs the information to an external device such as the movable body 10 or the terminal 14, via the communication unit 34. Details of the content of these processes will be described later.

Control Device of Movable Body

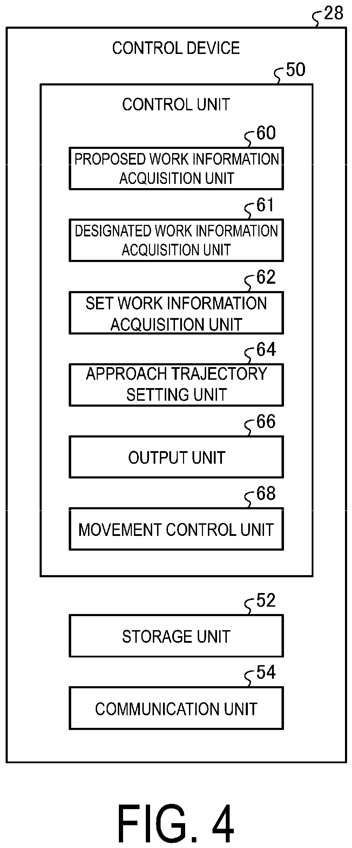

FIG. 4 is a schematic block diagram of the control device of the movable body. The control device 28 controls the movable body 10. The control device 28 is a computer, and as illustrated in FIG. 4, includes a control unit 50, a storage unit 52, and a communication unit 54. The storage unit 52 is a memory for storing various types of information such as the content of calculation by the control unit 50, and programs, and includes at least one of a RAM, a main storage device such as a ROM, and an external storage device such as an HDD for example. The communication unit 54 is a communication module that communicates with an external device, and is, for example, an antenna. The control device 28 wirelessly communicates with the computation device 12 and the terminal 14, but any communication scheme may be used.

The control unit 50 is a computation device, specifically, a CPU. The control unit 50 includes the proposed work information acquisition unit 60 (an example of a first information acquisition unit), a designated work information acquisition unit 61 (an example of a second information acquisition unit), a set work information acquisition unit 62 (an example of a third information acquisition unit), an approach trajectory setting unit 64, an output unit 66, and a movement control unit 68. The control unit 50 reads and executes a program (software) from the storage unit 52 to implement the proposed work information acquisition unit 60, the designated work information acquisition unit 61, the set work information acquisition unit 62, the approach trajectory setting unit 64, the output unit 66, and the movement control unit 68, and executes processing of those units. Note that the control unit 50 may execute such processing with a single CPU, or may include a plurality of CPUs and execute the processing with the plurality of CPUs. At least a part of the proposed work information acquisition unit 60, the designated work information acquisition unit 61, the set work information acquisition unit 62, the approach trajectory setting unit 64, the output unit 66, and the movement control unit 68 may be implemented by a hardware circuit.

The proposed work information acquisition unit 60 acquires proposed work information to be described later from the computation device 12. The designated work information acquisition unit 61 acquires designated work information to be described later from the terminal 14. The set work information acquisition unit 62 acquires set work information to be described later. The approach trajectory setting unit 64 sets the approach trajectory TRO. The output unit 66 outputs information to an external device such as the computation device 12 or the terminal 14 via the communication unit 54. The movement control unit 68 controls a movement mechanism such as a drive unit or steering device of the movable body 10 to control the movement of the movable body 10. Details of the content of these processes will be described later.

Terminal

The terminal 14 is a terminal that is operated by a user. This user is an operator that transports the target object P loaded on the vehicle V, such as the driver of the vehicle V, and the terminal 14 is a mobile terminal carried by the user. The terminal 14 includes a so-called smart phone, tablet terminal, laptop computer, and the like. However, the terminal 14 is not limited to a mobile terminal, and may be a computer fixedly installed, and the user operating the terminal 14 is also not limited to the driver of the vehicle V or the like.

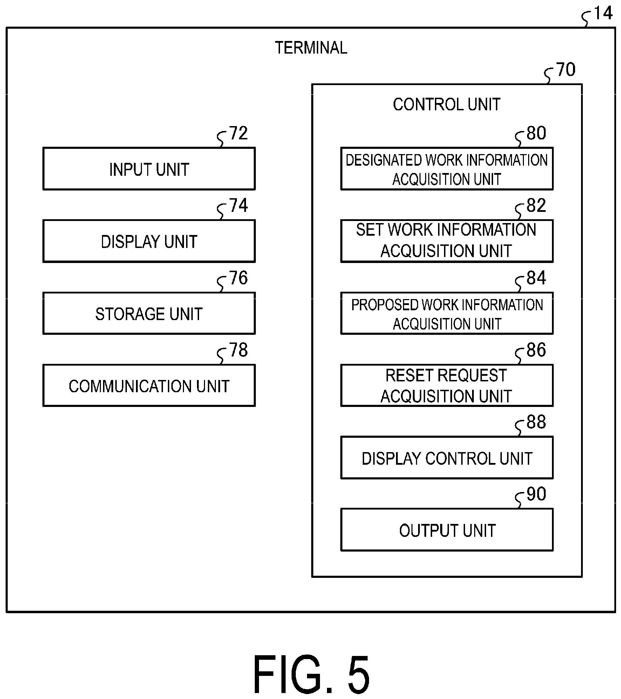

FIG. 5 is a schematic block diagram of the terminal according to at least one embodiment of the present disclosure. As illustrated in FIG. 5, the terminal 14 includes a control unit 70, an input unit 72, a display unit 74, a storage unit 76, and a communication unit 78. The input unit 72 is a device that accepts user operations, such as a touch panel, a mouse, or a keyboard, for example. The display unit 74 is a display device that displays an image. The storage unit 76 is a memory for storing information such as the content of calculation by the control unit 70, and programs, and includes at least one of a RAM, a main storage device such as a ROM, and an external storage device such as an HDD for example. The communication unit 78 is a communication module that communicates with an external device, and is, for example, an antenna. The terminal 14 wirelessly communicates with the movable body 10 and the computation device 12, but any communication scheme may be used.

The control unit 70 is a computation device, specifically, a CPU. The control unit 70 includes a designated work information acquisition unit 80 (an example of a first acquisition unit), a set work information acquisition unit 82 (an example of a second acquisition unit), a proposed work information acquisition unit 84 (an example of a third acquisition unit), a reset request acquisition unit 86, a display control unit 88, and an output unit 90. The control unit 70 reads and executes a program (software) from the storage unit 76 to implement the designated work information acquisition unit 80, the set work information acquisition unit 82, the proposed work information acquisition unit 84, the reset request acquisition unit 86, the display control unit 88, and the output unit 90, and executes processing of those units. Note that the control unit 70 may execute such processing with a single CPU, or may include a plurality of CPUs and execute the processing with the plurality of CPUs. At least a part of the designated work information acquisition unit 80, the set work information acquisition unit 82, the proposed work information acquisition unit 84, the reset request acquisition unit 86, the display control unit 88, and the output unit 90 may be implemented by a hardware circuit.

The designated work information acquisition unit 80 accepts input from the user to acquire designated work information to be described later. The set work information acquisition unit 82 acquires set work information to be described later from the movable body 10. The proposed work information acquisition unit 84 acquires proposed work information to be described later from the movable body 10. The reset request acquisition unit 86 acquires a reset request from the movable body 10. The display control unit 88 controls display of an image on the display unit 74. The output unit 90 outputs information to an external device such as the movable body 10 or the computation device 12 via the communication unit 78. Details of the content of these processes will be described later.

Processing by Control System

Next, the processing by the control system 1 described above will be described. In the control system 1, the movable body 10, the computation device 12, and the terminal 14 exchange information, to set the work details of the movable body 10 and to cause the movable body 10 to execute the work with the set work details. In the present embodiment, the movable body 10 picks up the target object P from the vehicle V, travels on the transport route R to transport the target object P to the transport destination area AR1, and unloads the target object P in the transport destination area AR1. Thus, the work details according to the present embodiment includes information of the target object P unloaded from the vehicle V (information of which target object P is to be the work target), information of the transport destination area AR1 in which the target object P is placed (information of the transport destination of the target object), and information of the transport route R (information of a route on which the target object P is transported).

Acquisition of Initial Designation Information

For example, when the vehicle V arrives at the facility W, the user inputs initial designation information to the input unit 72 of the terminal 14. The designated work information acquisition unit 80 of the terminal 14 acquires the initial designation information input by the user as one of pieces of the designated work information. The user inputs, as the initial designation information, information designating target object P to be transported and information designating a transport destination of the target object P. Examples of the information designating the target object P to be transported include: information of the target object P loaded on the vehicle V (ID of the target object P for example); and information indicating which target object P is placed in each placement area ARC of the vehicle V. In other words, the user inputs, for each placement area AR0, the information of the target object P placed as the information designating the target object to be transported. The information designating the transport destination of the target object P is information designating the transport destination area AR1 of the target object P, and is designated for each target object P. Thus, the user designates the transport destination area AR1 for each target object P to be transported. As the initial designation information, information of an arrangement (orientation) of the target object P may also be input.

Selection of Movable Body

The output unit 90 of the terminal 14 outputs the initial designation information acquired by the designated work information acquisition unit 80, to the computation device 12. The work information acquisition unit 40 of the computation device 12 acquires the initial designation information from the terminal 14. Based on the initial designation information, the movable body selection unit 42 of the computation device 12 selects the movable body 10 to perform the work. For example, the movable body selection unit 42 selects the movable body 10 to perform the work, from among a plurality of movable bodies assigned to the facility W. The movable body selection unit 42 which may select the movable body 10 by any method, may select, based on the position of the target object P as the work target, or the position of the transport destination area AR1, for example, a movable body that is appropriate for transportation of the target object P as the movable body 10 to perform the work. Note that the computation device 12 may select in advance the movable body 10 to perform the work. In this case, for example, the output unit 90 of the terminal 14 may output the initial designation information to the selected movable body 10.

Acquisition of Approach Route

The proposed work information acquisition unit 44 of the computation device 12 acquires information of the approach route R0 (see FIG. 1). The approach route R0 is a route to the placement area AR0 (target object P). The approach route R0 is preset to the placement area AR0, for example, and the proposed work information acquisition unit 44 acquires information (coordinate information) of the approach route R0 set to the placement area AR0 designated as the initial designation information. For example, the proposed work information acquisition unit 44 acquires the approach route R0 by reading the approach route R0 from the storage unit 32.

The approach route R0 is preset based on map information of the facility W. The map information of the facility W is information including position information of an obstacle (such as a post) placed in the facility W or a passage on which the movable body 10 can travel, and is, in other words, information indicating an area in which the movable body 10 can move in the area A. The approach route R0 may be set based on information of vehicle specifications of the movable body 10, in addition to the map information of the facility W. The information of the vehicle specifications is, for example, specifications affecting the route on which the movable body 10 can move, such as the size and the minimum turn radius of the movable body 10. When the approach route R0 is set further based on the information of the vehicle specifications, the approach route R0 may be set for each movable body. The approach route R0 may be set by a person based on the map information, the information of the vehicle specifications, and the like or may be automatically set by a device such as the computation device 12 based on the map information, the information of the vehicle specifications, and the like. When the approach route R0 is automatically set, a point (waypoint) desired to be passed for example may be designated. In this case, the shortest approach route R0 that passes through the point desired to be passed and circumvents an obstacle (a fixed object such as a wall) can be set. The approach route R0 is not necessarily set for each placement area AR0, and may be set for each parking position of the vehicle V for example. In this case, for example, the initial designation information includes information of the parking position of the vehicle V, and the proposed work information acquisition unit 44 acquires the position information of the approach route R0 set to the parking position of the vehicle V designated as the initial designation information.

Acquisition of Proposed Transport Route

The proposed work information acquisition unit 44 of the computation device 12 acquires information of the proposed transport route R1 as proposed work information. The proposed transport route R1 is the transport route R proposed to the user, and is, in other words, a candidate route of the actual transport route R. The proposed transport route R1 is a route from the placement area ARC where the target object P is placed to the transport destination area AR1. The proposed transport route R1 is preset for each of the placement area ARC and the transport destination area AR1. The proposed work information acquisition unit 44 acquires the proposed transport route R1 preset as the route from the placement area AR0 to the transport destination area AR1 designated as the initial designation information. For example, the proposed work information acquisition unit 44 acquires the proposed transport route R1 by reading the proposed transport route R1 from the storage unit 32. The proposed work information acquisition unit 44 acquires the proposed transport route R1 for each of the target objects P designated to be transported, as the initial designation information. The proposed transport route R1 may be set based on the map information of the facility W and the information of the vehicle specifications, as in the case of the approach route R0.

The output unit 48 of the computation device 12 outputs the information of the proposed transport route R1 acquired (an example of the proposed work information), to the selected movable body 10. The proposed work information acquisition unit 60 of the movable body 10 acquires, from the computation device 12, the proposed work information including information of the proposed transport route R1. The output unit 66 of the movable body 10 outputs the information of the proposed transport route R1 acquired to the terminal 14. The proposed work information acquisition unit 84 of the terminal 14 acquires information of the proposed transport route R1 from the movable body 10. The display control unit 88 of the terminal 14 causes the display unit 74 to display the proposed transport route R1 acquired by the proposed work information acquisition unit 84. Note that the proposed transport route R1 may be output from the computation device 12 directly to the terminal 14 without being relayed by the movable body 10.

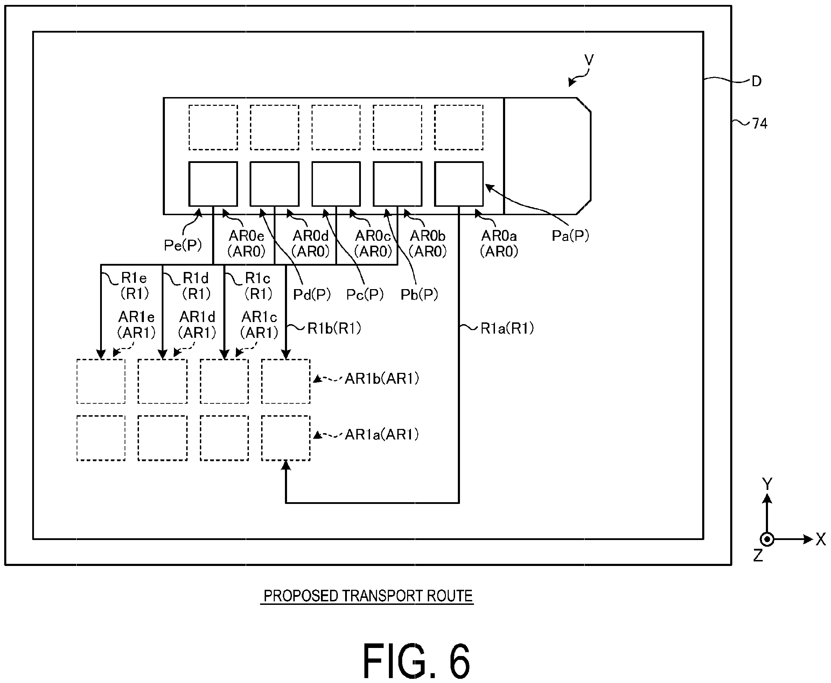

FIG. 6 is a schematic view illustrating an example of a proposed transport route displayed on the display unit. As illustrated in FIG. 6, the display control unit 88 causes a screen D of the display unit 74 to display an image of the vehicle V, an image of the placement area AR0 in the vehicle V, an image of the target object P, an image of the transport destination area AR1, and an image of the proposed transport route R1. In the example illustrated in FIG. 6, as the initial designation information, a target object Pa is designated to be placed in a placement area AR0a, a target object Pb is designated to be placed in a placement area AR0b, a target object Pc is designated to be placed in a placement area AR0c, a target object Pd is designated to be placed in a placement area AR0d, and a target object Pe is designated to be placed in a placement area AR0e. In the example illustrated in FIG. 6, as the initial designation information, a transport destination area ARia is designated as a transport destination of the target object Pa, a transport destination area ARlb is designated as a transport destination of the target object Pb, a transport destination area ARlc is designated as a transport destination of the target object Pc, a transport destination area ARld is designated as a transport destination of the target object Pd, and a transport destination area ARle is designated as a transport destination of the target object Pe. In the example of FIG. 6, the screen D displays a proposed transport route R1a for the target object Pa, a proposed transport route R1b for the target object Pb, a proposed transport route R1c for the target object Pc, a proposed transport route R1d for the target object Pd, and a proposed transport route R1e for the target object Pe. The display control unit 88 displays the images of the vehicle V, the placement area AR0, the transport destination area AR1, and the proposed transport route R1 on the screen D, so that the positional relationship thereamong matches the actual positional relationship among the vehicle V, the placement area AR0, the transport destination area AR1, and the proposed transport route R1 in the facility W. However, the displayed positional relationship does not need to match the actual positional relationship exactly.

Note that in the present embodiment, the computation device 12 generates the proposed transport route R1 (proposed work information), but this should not be construed as a limitation. For example, the movable body 10 may include the proposed work information acquisition unit 44, and the movable body 10 may generate the proposed transport route R1 (proposed work information). In this case, the terminal 14 outputs the initial designation information (designated work information) to the movable body 10, and the movable body 10 generates the proposed transport route R1 (proposed work information) based on the initial designation information.

Acquisition of Designated Transport Route

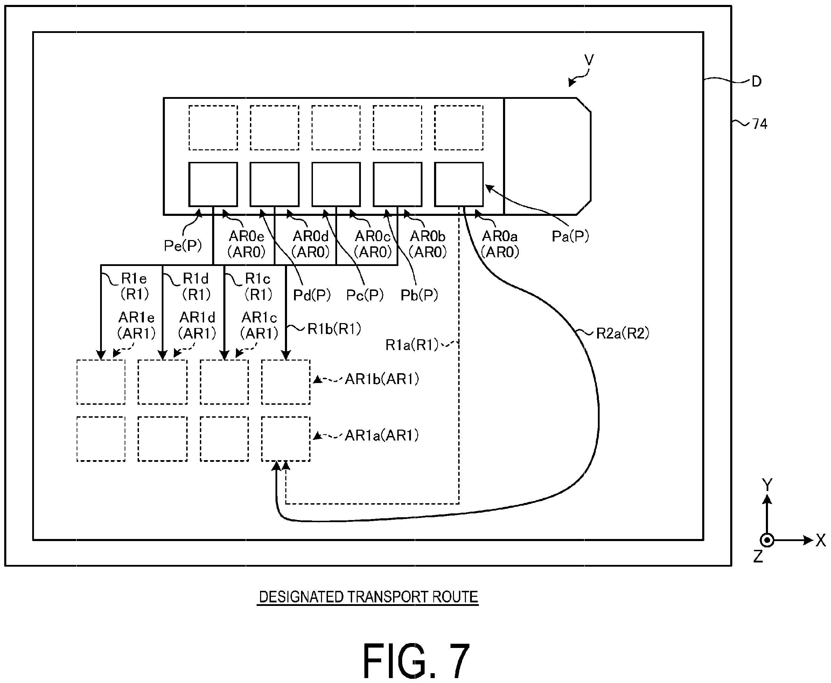

FIG. 7 is a schematic view illustrating an example of a proposed transport route displayed on the display unit. Upon acquiring the proposed transport route R1 and displaying the proposed transport route R1 on the screen D, the terminal 14 acquires, using the designated work information acquisition unit 80, the information of a designated transport route R2 as the designated work information. The designated transport route R2 is the transport route R designated by the user. The designated transport route R2 is a route from the placement area ARC where the target object P is placed to the transport destination area AR1, designated by the user. As illustrated in FIG. 7, the terminal 14 accepts the input of the designated transport route R2 while displaying the proposed transport route R1 on the screen D. When the user who has checked the proposed transport route R1 displayed on the terminal 14 desires to designate the route other than the proposed transport route R1, the user inputs information of the designated transport route R2 to the input unit 72 of the terminal 14. For example, the user selects the proposed transport route R1 and the target object P to be changed on the screen D, and inputs a rough trajectory from the placement area AR0 to the transport destination area AR1 on the screen D. The terminal 14 acquires this trajectory as the designated transport route R2. Note that the designated transport route R2 may be input by any method.

In the example illustrated in FIG. 7, the user rejects the proposed transport route R1a of the target object Pa, and inputs a designated transport route R2a of the target object Pa. The display control unit 88 displays an image of the designated transport route R2a on the screen D on which the proposed transport route R1 is displayed. Note that in the example of FIG. 7, the user has accepted the proposed transport routes R1b, R1c, R1d, and R1e, and thus no designated transport route R2 is input.

The output unit 90 of the terminal 14 outputs the information (designated work information) of the designated transport route R2 acquired by the designated work information acquisition unit 80, to the movable body 10. The designated work information acquisition unit 61 of the movable body 10 acquires the information (designated work information) of the designated transport route R2 of the terminal 14.

Acquisition of Set Transport Route

The set work information acquisition unit 62 of the movable body 10 acquires information of the set transport route R3 as the set work information based on information (designated work information) of the designated transport route R2. The set transport route R3 is the transport route R generated based on the designated transport route R2. The set transport route R3 is a route from the placement area ARC where the target object P is placed to the transport destination area AR1. In the present embodiment, the set work information acquisition unit 62 of the movable body 10 sets the set transport route R3 (set work information) based on the designated transport route R2 (designated work information).

As in the method of setting the approach route R0, the set work information acquisition unit 62 sets the set transport route R3 based on the map information of the facility W and the information of the vehicle specifications. The set transport route R3 is set by the set work information acquisition unit 62 based on the map information of the facility W and the information of the vehicle specifications, to be a route close to the designated transport route R2. When the information of the orientation (arrangement) of the target object P is input as the initial designation information, the set work information acquisition unit 62 preferably sets the set transport route R3 while also taking the orientation of the target object P into consideration, that is, based on the orientation of the target object P.

In the present embodiment, the set work information acquisition unit 62 sets the set transport route R3 using model predictive control (MPC). An example of a method for calculating the set transport route R3 will be described below. Note that the following calculation method is merely an example, and thus the set transport route R3 may be calculated using other methods.

The following Equation (1) represents control input u(k) of the movable body 10.

[Equation 1]

$$u(k) = [v(k), \phi(k)]^{\mathrm{T}} \qquad \cdots (1)$$

In the equation, v(k) represents a speed command value of the movable body 10, φ(k) represents a yaw rate command value of the movable body 10, and k represents an index of discrete time. The following Equation (2) represents control input U(k) of the movable body 10 for each discrete time. Note that N represents a predictive horizon.

[Equation 2]

$$U(k) = [u(k), u(k+1), \cdots, u(k+N-1)]^{\mathrm{T}} \qquad \cdots (2)$$

The set work information acquisition unit 62 calculates the set transport route R3 by solving the optimization problem in Equation (3) below to obtain u(k), u(k+1), ..., u(k+N-1) as an optimal solution of the control input. Known techniques such as sequential quadratic programming and internal point method may be used as the method of solving the optimization problem.

[Equation 3]

$$J(U(k)) \to \min \qquad \cdots (3)$$

When the set transport route R3 is calculated in this manner, constraint conditions in the following Equations (4) to (8) are given for example.

[Equation 4]

$$x(k) = v(k) \cos \theta(k) \qquad \cdots (4)$$

[Equation 5]

$$y(k) = v(k) \sin \theta(k) \qquad \cdots (5)$$

[Equation 6]

$$\theta(k) = \frac{v(k)}{L} \tan \phi(k) \qquad \cdots (6)$$

[Equation 7]

$$v(k) \leq v_{\mathrm{MAX}} \qquad \cdots (7)$$

[Equation 8]

$$-\phi_{\mathrm{MAX}} \leq \phi(k) \leq \phi_{\mathrm{MAX}} \qquad \cdots (8)$$

In the Equations, x represents the coordinate of the movable body 10 in the direction X, y represents a coordinate of the movable body 10 in the direction Y, θ represents an inclination angle of the movable body 10 relative to a reference axis, and L represents a wheelbase indicating the distance between the front and rear wheels of the movable body 10. vMAX and φMAX represent the upper limit values of the preset speed and yaw rate, respectively.

Note that there may be a plurality of routes for reaching the transport destination area AR1 from the placement area AR0. In this case, the set work information acquisition unit 62 calculates a plurality of routes from the placement area AR0 to the transport destination area AR1, that is, calculates a plurality of routes that are candidates of the transport route, and sets, as the set transport route R3, a route closest to the designated transport route R2 among these routes, for example.

For the target object P for which no designated transport route R2 is designated, that is, the target object P for which the proposed transport route R1 has been accepted by the user, the proposed transport route R1 is directly set as the set transport route R3 by the set work information acquisition unit 62. In other words, when the designated transport route R2 is not designated by the user, the set work information acquisition unit 62 sets the preset proposed transport route R1 to be the set transport route R3. For the target object P for which no designated transport route R2 is designated, the set work information acquisition unit 62 may set the set transport route R3 based on the proposed transport route R1 using a method similar to that described above.

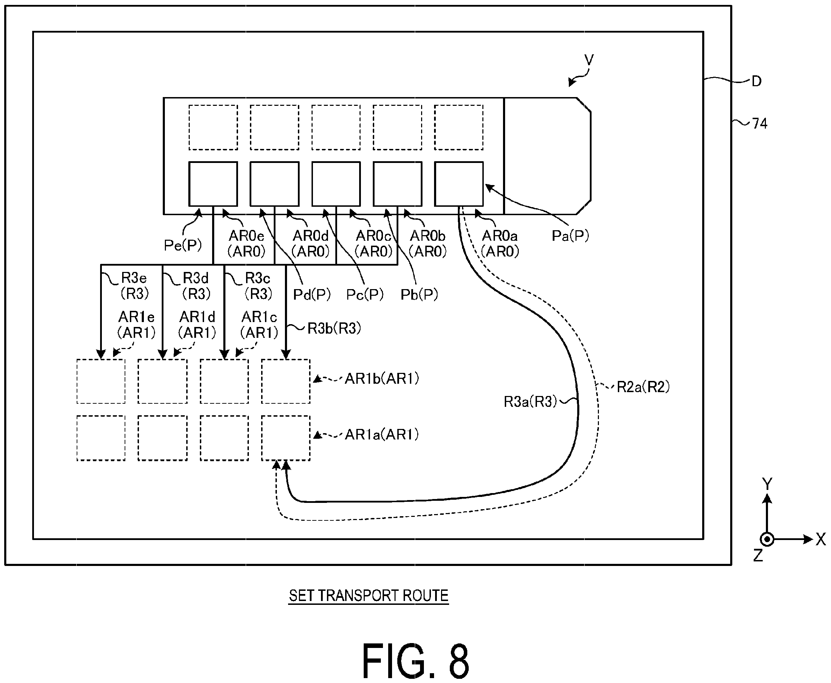

FIG. 8 is a schematic view illustrating an example of a set transport route displayed on the display unit. Upon thus setting the set transport route R3, the movable body 10 outputs, using the output unit 66, the information (set work information) of the set transport route R3 to the terminal 14. The set work information acquisition unit 82 of the terminal 14 acquires, from the movable body 10, information (set work information) of the set transport route R3. As illustrated in FIG. 8, the display control unit 88 of the terminal 14 causes the screen D of the display unit 74 to display an image of the set transport route R3 (set work information) acquired by the set work information acquisition unit 82. In the example illustrated in FIG. 8, a set transport route R3a set based on the designated transport route R2a for the target object Pa is displayed. In addition, in the example illustrated in FIG. 8, the designated transport route R2 is not designated for the target objects Pb, Pc, Pd, and Pe, and thus the proposed transport routes R1b, R1c, R1d, and R1e are directly set as the set transport routes R3b, R3c, R3d, and R3e.

The terminal 14 acquires information of whether the user accepts the set transport route R3. For example, when the user inputs information (acceptance information) indicating the acceptance of the set transport route R3 to the input unit 72 of the terminal 14, the terminal 14 acquires the acceptance information indicating that the user has accepted the set transport route R3. Note that, when the set transport route R3 is not accepted by the user, the designated transport route R2 is again input, for example. In this case, the set transport route R3 is updated and set by the movable body 10 based on the newly input designated transport route R2, and is displayed on the terminal 14. Thus, when the set transport route R3 is not accepted by the user, the movable body 10 updates and sets the set transport route R3 based on the designated transport route R2 newly designated by the user.

The output unit 90 of the terminal 14 outputs the acceptance information to the movable body 10. The set work information acquisition unit 62 of the movable body 10 acquires the acceptance information from the terminal 14, and outputs, using the output unit 66, the accepted set transport route R3 to the computation device 12. The exclusive control unit 46 of the computation device 12 acquires the accepted set transport route R3 from the movable body 10. Note that the accepted set transport route R3 may be output directly to the computation device 12 by the terminal 14, without being relayed by the movable body 10.

In the present embodiment, the movable body 10 generates the set transport route R3 (set work information), but this should not be construed as a limitation. The computation device 12 may include the set work information acquisition unit 62 and the computation device 12 may generate the set transport route R3 (set work information) for example. In this case, the terminal 14 outputs the designated transport route R2 (designated work information) to the computation device 12 via the movable body 10 or directly, and the computation device 12 generates the set transport route R3 (set work information) based on the designated transport route R2 (designated work information). The computation device 12 outputs the generated set transport route R3 (set work information) to the terminal 14 via the movable body 10 or directly.

Prohibited Route Setting

The exclusive control unit 46 of the computation device 12 checks whether the set transport route R3 is set as the prohibited route. The prohibited route is a route (area) prohibiting entry of other movable bodies 10 when the movable body 10 is traveling. When there is one movable body 10 traveling and there is another movable body 10 traveling close to the route of the movable body 10, the movable bodies might collide with each other. To prevent such collision, a prohibited route is set when the movable body 10 travels. The prohibited route may be set by any method. For example, a route (area) close to a route on which the movable body 10 is scheduled to travel is set as the prohibited route. Note that the route (area) close to the route on which the movable body 10 is scheduled to travel refers to, for example, a route (area) within a predetermined distance range from the route on which the movable body 10 is scheduled to travel.

The exclusive control unit 46 checks whether at least a part of the set transport route R3 is set as the prohibited route for the movable body 10 traveling, and when the at least a part of the set transport route R3 is not set as the prohibited route, registers the set transport route R3 and determines to cause the movable body 10 to travel on the set transport route R3. When at least a part of the set transport route R3 is set as the prohibited route for the other movable body 10 traveling, the exclusive control unit 46 preferably does not cause the movable body 10 to start traveling until setting of the prohibited route is released.

Upon determining to cause the movable body 10 to travel on the set transport route R3, the exclusive control unit 46 sets the prohibited route corresponding to the set transport route R3. The prohibited route corresponding to the set transport route R3 is a route (area) prohibiting entry of the other movable body 10 (a movable body other than the movable body 10 traveling on the set transport route R3). Similarly, the exclusive control unit 46 also checks whether the approach route R0 is set as the prohibited route for the other movable body 10 traveling, and when the approach route R0 is not set as the prohibited route, sets the prohibited route corresponding to the approach route R0.

Upon setting the prohibited route corresponding to the set transport route R3, the output unit 48 of the computation device 12 outputs a command to cause the movable body 10 to start the work. Upon receiving the command to start the work from the computation device 12, the movable body 10 starts the work. The details of the work will be described later.

Processing Flow Until Work Starts

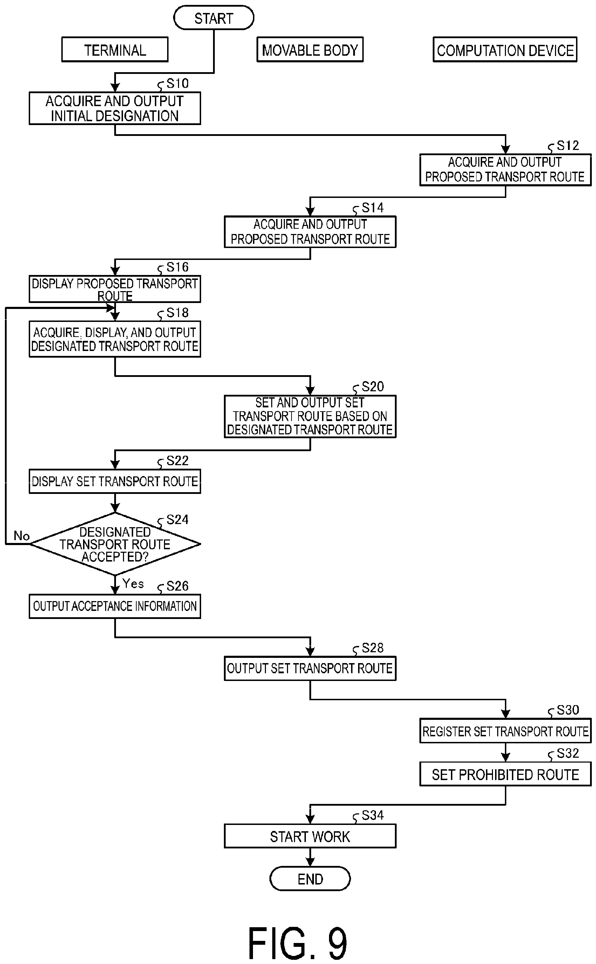

A processing flow until the movable body 10 starts the work as described above will be described. FIG. 9 is a flowchart illustrating the processing flow until the movable body starts the work. As illustrated in FIG. 9, the terminal 14 acquires the initial designation information input by the user, that is, the information designating the target object P to be transported, and the information designating the transport destination of the target object P, and outputs the acquired information to the computation device 12 (Step S10). Based on the initial designation information, the computation device 12 acquires the information of the proposed transport route R1 and outputs the information to the movable body 10 (Step S12). The movable body 10 acquires the information of the proposed transport route R1 from the computation device 12 and outputs the information to the terminal 14 (Step S14).

The terminal 14 displays the acquired proposed transport route R1 on the display unit 74 (Step S16). The user checks the proposed transport route R1 displayed on the display unit 74, and inputs the designated transport route R2 to the terminal 14. The terminal 14 acquires the information of the designated transport route R2 input by the user and causes the display unit 74 to display the information and outputs the information to the movable body 10 (Step S18). The movable body 10 sets the set transport route R3 based on the acquired designated transport route R2 and outputs the set transport route R3 to the terminal 14 (Step S20). As described above, the set transport route R3 may be generated by the computation device 12. The terminal 14 causes the display unit 74 to display the acquired set transport route R3 (Step S22) and waits for acceptance by the user. When the set transport route R3 is not accepted (Step S24; No), the user newly designates the designated transport route R2, and thus the processing returns to Step S18. On the other hand, when the set transport route R3 is accepted by the user (Step S24; Yes), that is, when the acceptance information is acquired, the terminal 14 outputs the acceptance information to the movable body 10 (Step S26).

Upon acquiring the acceptance information, the movable body 10 outputs the information of the accepted set transport route R3 to the computation device 12 (Step S28). Upon acquiring the information of the accepted set transport route R3, the computation device 12 registers the set transport route R3 (Step S30), that is, determines to cause the movable body 10 to perform the transport on the set transport route R3, and sets the prohibited route corresponding to the set transport route R3 (Step S32). The computation device 12 outputs a command to cause the movable body 10 to start the work, and the movable body 10 starts the work (Step S34).

In the description above, the proposed transport route R1 (proposed work information) is first generated by the computation device 12. Then, the user checks the proposed transport route R1 (proposed work information), and inputs the designated transport route R2 (designated work information). However, this should not be construed as a limitation. For example, the user may input the designated transport route R2 (designated work information) together with the initial designation information to the terminal 14 without the proposed transport route R1 (proposed work information) being generated.

The control system 1, that is, the movable body 10 may be capable of switching between a first mode and a second mode. Under the first mode, the set transport route R3 (set work information) is generated based on the designated transport route R2 (designated work information) input from the user as described above. Under the second mode, the set transport route R3 (set work information) is automatically generated, without being based on the designated transport route R2 (designated work information). The second mode is a mode in which the set transport route R3 is generated with no designated transport route R2 designated, when the initial designation information is input from the user for example. In other words, under the second mode, the set transport route R3 is generated based on the proposed transport route R1, for example. The switching between the first mode and the second mode is implemented by an input from the user to the terminal 14 for example. Specifically, the terminal 14 displays an image for the selection between the first mode and the second mode, acquires a selection of the first mode or the second mode by the user, and determines which of the first mode or the second mode is to be set. For example, the first mode is set when the user wants to manage the work details and the second mode is set when the user wants to reduce the management load on the user, whereby the processing can be executed flexibly in accordance with the intention of the user.

Work Performed by Movable Body

Traveling According to Approach Route and Detection of Position/Arrangement Information of Target Object

As illustrated in FIG. 1, upon acquiring a command to start the work, the movable body 10 travels toward the placement area ARC in accordance with the approach route R0, under the control by the movement control unit 68. The movable body 10 continuously causes the sensor 26 to perform the detection while traveling along the approach route R0, and continuously executes processing of causing the sensor 26 to detect the position/arrangement information of the target object P. The sensor 26 detects the position/arrangement information of the target object P once the movable body 10 is within such a distance from the target object P that the sensor 26 can detect the position/arrangement information of the target object P.

The position/arrangement information of the target object P is information indicating the position (coordinates) and the arrangement (orientation) of the target object P. For example, when the sensor 26 is configured to emit a laser beam, the movable body 10, while traveling along the approach route R0, causes the sensor 26 to perform scanning in the lateral direction (horizontal direction) while emitting the laser beam. When the movable body 10 approaches the target object P, the target object P in the front direction of the sensor 26 reflects the laser beam. The sensor 26 receives the reflected light from the target object P. The movable body 10 detects the position and the orientation of the target object P based on the light reflected from the target object P and received by the sensor 26. The movable body 10 can calculate the position and the arrangement of the target object P from the direction in which the reflected light travels from the target object P toward the sensor 26, and a time from the emission of the laser beam to the reception of the reflected light.

Traveling According to Approach Trajectory

The approach trajectory setting unit 64 of the movable body 10 calculates the approach trajectory TRO that is a route to a target position/arrangement where the movable body 10 has a predetermined position/arrangement relative to the target object P, based on the position/arrangement information of the target object P. For example, the target position/arrangement is the position and the arrangement with which the target object P can be picked up (for example, the forward movement enables insertion of the fork 24 into an opening of the pallet of the target object P). The approach trajectory setting unit 64 calculates the target position/arrangement based on the position/arrangement information of the target object P, and calculates the route to the target position/arrangement as the approach trajectory TR0. The approach trajectory TRO is calculated by a method similar to that for calculating the set transport route R3 described above.

When the approach trajectory TRO is calculated, the movable body 10 switches the traveling route from the approach route R0 to the approach trajectory TR0, travels in accordance with the approach trajectory TR0, reaches the target position/arrangement, and picks up the target object P placed in the placement area AR0.

Traveling According to Set Transport Route

After picking up the target object P, the movable body 10 travels in accordance with the set transport route R3, transports the target object P to the transport destination area AR1, and places (unloads) the target object P in the transport destination area AR1.

Upon unloading the target object P in the transport destination area AR1, the movable body 10 determines whether there is any other target object P to be transported. If there is no other target object to be transported, the work ends. When there is another target object P to be transported, the movable body 10 travels in accordance with the approach route R0 set for the target object P (placement area AR0), and continues to execute the processing similar to that described above.

For example, when the approach route R0 is not set for each placement area AR0, the movable body 10 moves in accordance with the approach route R0, used for picking up the target object P previously transported, to the vicinity of the next target object P. The next target object P is in the vicinity of the previous target object P, and thus the approach route R0 for the target object P previously transported can also be used for detecting the position information/arrangement of the next target object P, whereby the approach trajectory TRO to the next target object P can be generated.

Setting Set Transport Route While Work is in Progress

In the above description, the set transport route R3 is set by designating the designated transport route R2 before the movable body 10 starts the work, but the set transport route R3 may be set by designating the designated transport route R2 while the work performed by the movable body 10 is in progress, that is, during the transport. The specific description will be given below.

The movable body 10, while traveling in accordance with the approach route R0 or the set transport route R3, detects an obstacle by means of the sensor 26 or other sensors. The obstacle refers to an object the movable body 10 may collide with if the movable body 10 continues to travel without change. Upon detecting the obstacle, the movable body 10 determines that it is impossible to continue to travel without change, and stops traveling. Upon detecting the obstacle and determining that it is impossible to continue to travel without change, the movable body 10 causes the output unit 66 to output a reset request to the terminal 14. The reset request is information requesting the terminal 14 to designate the designated transport route R2 again.

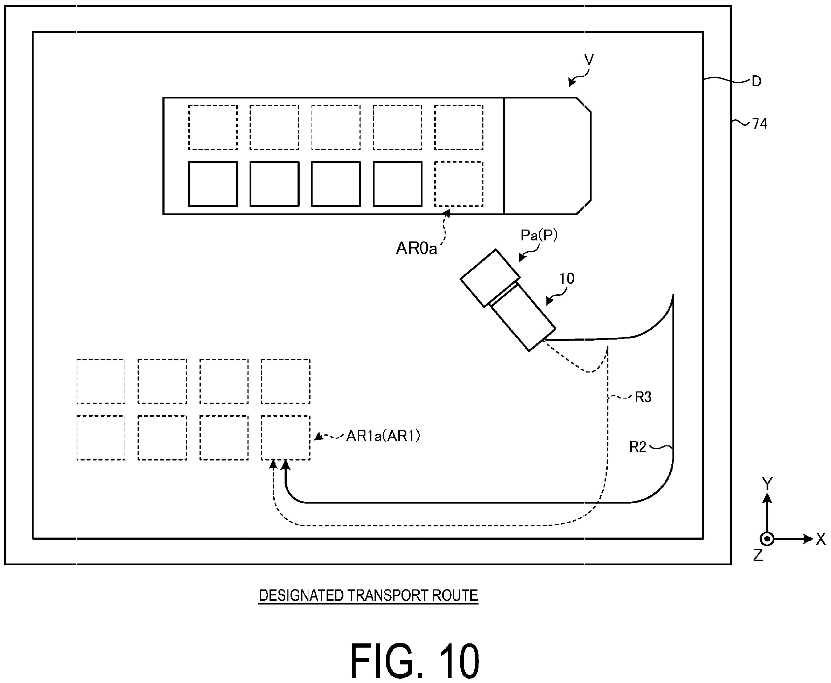

FIG. 10 is a schematic view illustrating an example of a designated transport route displayed on the display unit. The reset request acquisition unit 86 of the terminal 14 acquires the reset request from the movable body 10. The terminal 14 issues a notification indicating the acquisition of the reset request, by means of sound, or display on the display unit 74, for example. Upon acquiring the reset request, the terminal 14 displays the image for accepting the input of the designated transport route R2 on the display unit 74. The user visually checks the obstacle for example, and inputs a new designated transport route R2 that can circumvent the obstacle to the terminal 14. Upon acquiring the new designated transport route R2, the terminal 14 displays the new designated transport route R2 on the display unit 74. In the example illustrated in FIG. 10, an image of the movable body 10, in addition to images of the vehicle V, the placement area AR0, the transport destination area AR1, and the like, is included in the image for accepting the input of the designated transport route R2. For example, the image of the movable body 10 is displayed at a position reflecting the actual position where the movable body 10 is stopped. The user inputs the new designated transport route R2 from the position where the movable body 10 is stopped to the transport destination area AR1, and the terminal 14 acquires the information of the new designated transport route R2.

The terminal 14 outputs the information of the new designated transport route R2 to the movable body 10. The movable body 10 newly generates the set transport route R3 based on the new designated transport route R2 by a method similar to the one described above, and outputs the generated route to the terminal 14. The terminal 14 displays the newly generated set transport route R3 on the display unit 74, and when the acceptance from the user is acquired, outputs the acceptance information of the newly generated set transport route R3 to the movable body 10. As in the description above, the movable body 10 outputs the accepted set transport route R3 to the computation device 12, and starts traveling in accordance with the newly generated set transport route R3 upon receiving a command to start the work from the computation device 12.

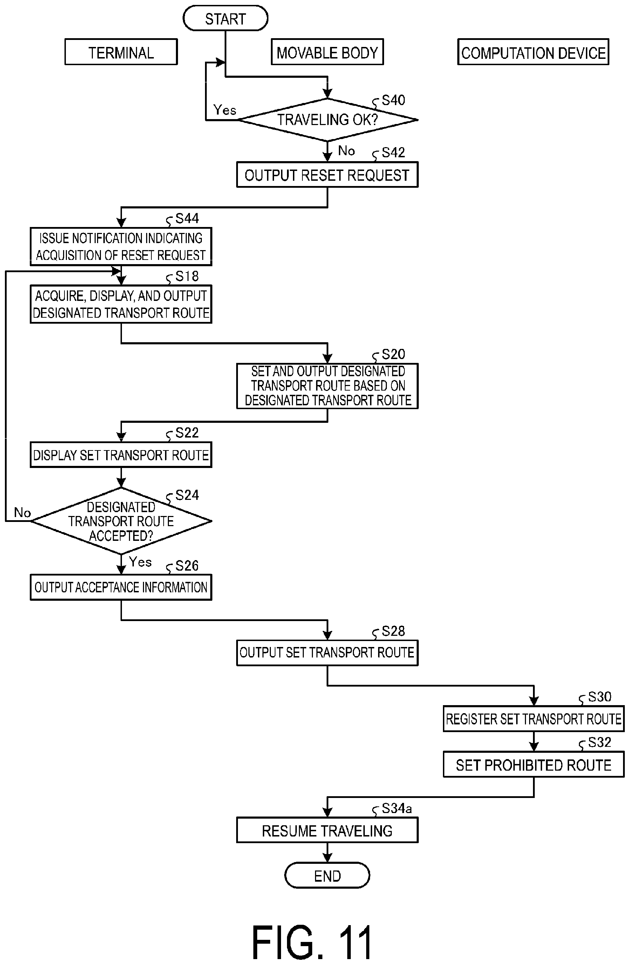

FIG. 11 is a flowchart illustrating a processing flow for setting a set transport route while work is in progress. As illustrated in FIG. 11, the movable body 10 determines whether it is possible to continue to travel without change, while traveling along the set transport route R3 (Step S40). When it is possible to continue to travel (Step S40; Yes), the processing returns to Step S40 and the traveling continues. When it is impossible to continue to travel (Step S40; No), that is, when an obstacle is detected, the movable body 10 stops traveling and outputs the reset request to the terminal 14 (Step S42). The terminal 14 issues a notification indicating the acquisition of the reset request (Step S44), and prompts the user to reset the designated transport route R2. The user inputs the designated transport route R2 to the terminal 14. Then, the terminal 14 acquires the designated transport route R2, displays the designated transport route R2 on the display unit 74, and outputs the designated transport route R2 to the movable body 10 (Step S18). The processing from Step S18 to Step S32 is similar to that in FIG. 9, and thus a description thereof is omitted. When the prohibited route is set in Step S32 and the command for causing the movable body 10 to start the work is output from the computation device 12 to the movable body 10, the movable body 10 resumes the traveling on the set transport route R3 newly set (Step S34a).

Note that, in the description above, reset of the designated transport route R2 is described. the However, approach route R0 may also be reset through a procedure that is similar to that for setting the set transport route R3 when the obstacle is detected during the traveling on the approach route R0 to the target object P.

In the above description, upon detecting the obstacle while traveling, the movable body 10 outputs the reset request to request the terminal 14 to designate the designated transport route R2. However, this should not be construed as a limitation. Upon detecting the obstacle, the movable body 10 may generate a new route (the approach route R0 or the set transport route R3) that can circumvent the obstacle, and switch the travel route to the new route. Thus, the movable body 10 may spontaneously generate a new route, instead of generating it in response to the instruction from the user. In this case, the movable body 10 may transmit information of the new route to the terminal 14, and may start traveling on the new route when the terminal 14 acquires information indicating that the user has accepted the new route or may start traveling on the new route without acquiring the acceptance from the user.

In the above description, the resetting of the designated transport route R2 and updating of the set transport route R3 are triggered by the detection of the obstacle by the movable body 10, but the trigger is not limited to this. For example, updating of the set transport route R3 may be triggered by the user determining that the user desires to set the set transport route R3. In this case, the terminal 14 accepts the input for resetting the designated transport route R2 while the movable body 10 is working, and outputs the information of the designated transport route R2 reset to the movable body 10 when the designated transport route R2 is reset. Upon acquiring the information of the designated transport route R2 reset, the movable body 10 stops traveling and generates the set transport route R3 for example.

Example of Determining Other Work Details

In the description above, the designated transport route R2 is designated as the designated work information, and the set transport route R3 is set as the set work information, but the work details other than the transport route may be designated by the user. An example of designation of the work details other than the transport route will be described below.

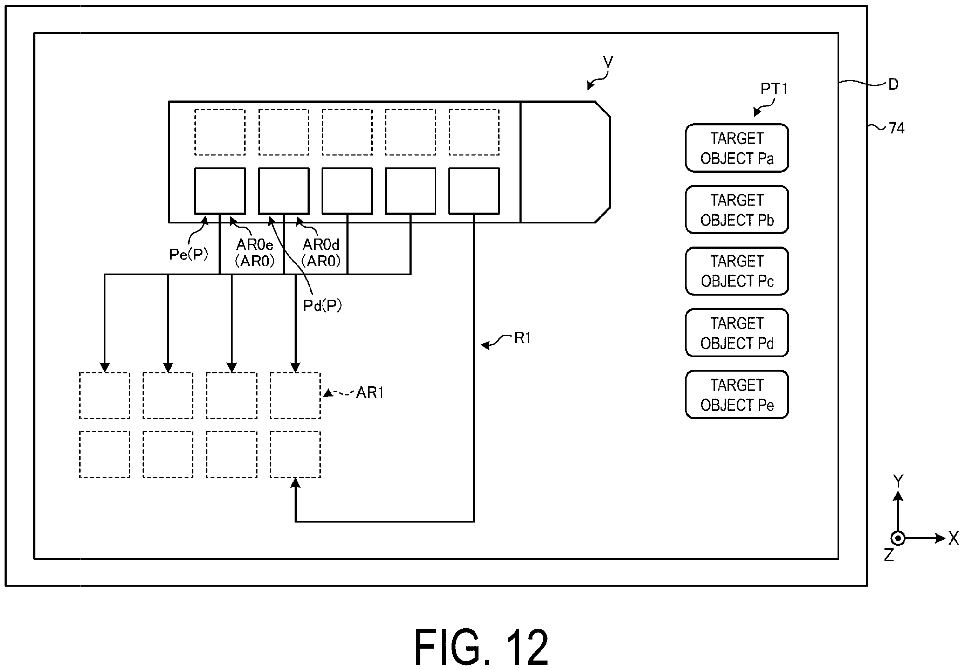

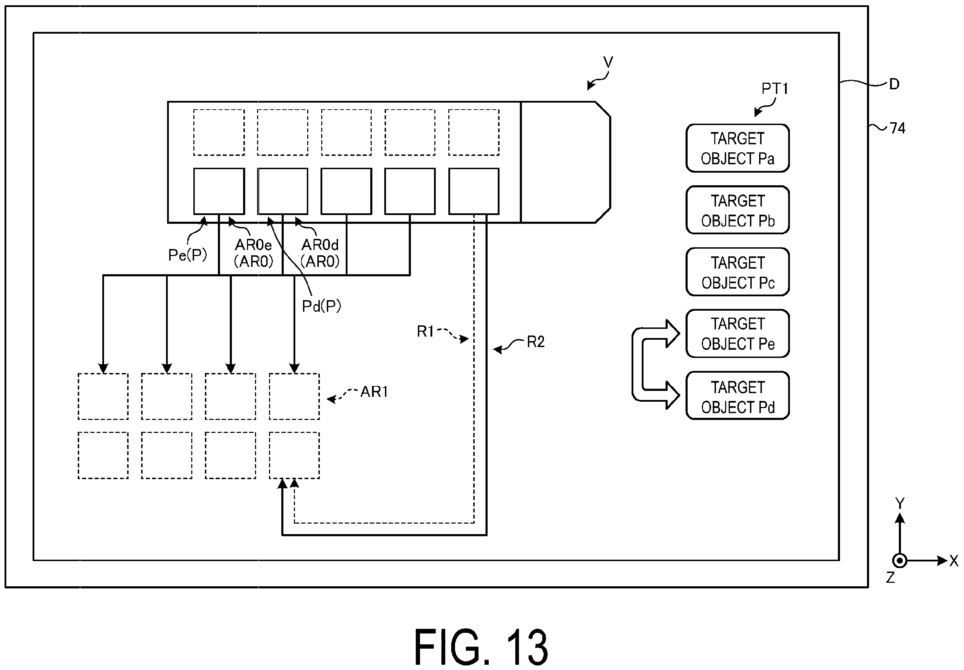

FIG. 12 and FIG. 13 are diagrams illustrating images in a case where an order in which target objects are transported (transport order) is designated. Based on the initial designation information, the computation device 12 may set the transport order of target objects P, as proposed work details. In this case, as illustrated in FIG. 12, the terminal 14 displays, on the screen D, a transport order image PT1 indicating a transport order of the target objects P, together with the proposed transport route R1. In the example of FIG. 12, the proposed work details are set so that the target objects Pa, Pb, Pc, Pd, and Pe are transported in this order.

The user checks the transport order image PT1 displayed on the screen D, and inputs information designating the transport order to the input unit 72 of the terminal 14 as the designation information, when the user desires to change the transport order. For example, the user selects the image of the target object P the transport order of which is to be changed in the transport order image PT1, and performs operation of changing the transport order. In the example illustrated in FIG. 13, the transport order of the target object Pd and the target object Pe is exchanged. In this case, for example, the user performs operation of moving the image of the target object Pd to be below the image of the target object Pe, or operation of moving the image of the target object Pe to be above the image of the target object Pd. The terminal 14 accepts an input thus designating the transport order, and acquires the input as the designated work information, that is, the information indicating the transport order. The terminal 14 outputs the information indicating the transport order to the movable body 10 as the designated work information. The movable body 10 sets the transport order designated by the designated work information as the set work information, and transports the target objects P in the designated transport order.

Depending on the layout of the vehicle V, there may be a target object P that cannot be unloaded until another target object P is unloaded. For example, by designating the transport order in such a case, the target objects P can be appropriately unloaded. The designation of the transport order is also applicable to a loading work according to the second embodiment described later.

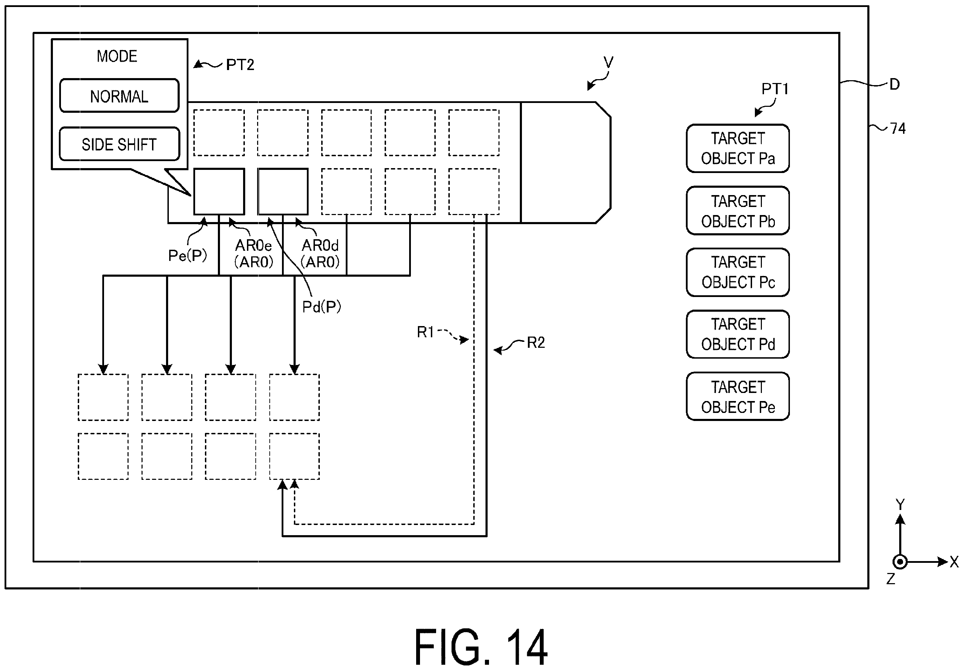

FIG. 14 is a diagram illustrating an image in a case where a transport method for the target object is designated. The computation device 12 may set the transport method for the target object P as the proposed work information. The transport method for the target object P in the present example refers to operation of the fork 24 for picking up the target object P. More specifically, a normal mode in which the fork 24 picks up the target object P without side shift, and a side shift mode in which the forks 24 picks up the target object P by side shift are selected. The side shift is an action of the fork 24 for moving in the lateral direction. The computation device 12 sets the normal mode as the proposed work information for example. The terminal 14 displays, on the screen D, a transport method image PT2 indicating a method of transporting the target object P, together with the proposed transport route R1. The transport method image PT2 may be displayed in response to a user operation, such as, for example, long press of the input unit 72. Thus, the display control unit 88 of the terminal 14 causes the display unit 74 to display the transport method image PT2 in response to the operation of the user on the terminal 14. For example, when the user selects the target object P, for which the transport method is to be changed, on the screen D, the display control unit 88 of the terminal 14 causes the transport method image PT2 to be displayed. Then, the user designates the transport method by selecting the side shift mode on the transport method image PT2. The terminal 14 causes the designated work information acquisition unit 80 to acquire the information of the transport method designated by the user, and causes the output unit 90 to output the information to the movable body 10 as the designated work information. The movable body 10 sets the transport method designated by the designated work information as the set work information, and transports the target objects P by the designated transport method. In the example where the side shift mode is selected, the terminal 14 causes the designated work information acquisition unit 80 to acquire information indicating whether the target object P is to be picked up by side shift (information indicating the transport method for the target object P), and causes the output unit 90 to output the information to the movable body 10 as the designated work information. Upon acquiring the information indicating that the target object P is to be picked up through side shift as the designated work information, the movable body 10 picks up the target object by side shift.

Depending on the layout of the vehicle V, there may be a target object P that cannot be unloaded unless side shift is performed. For example, by designating the transport method in such a case, the target object P can be appropriately unloaded. The designation of the transport method is also applicable to a loading work according to the second embodiment described later.

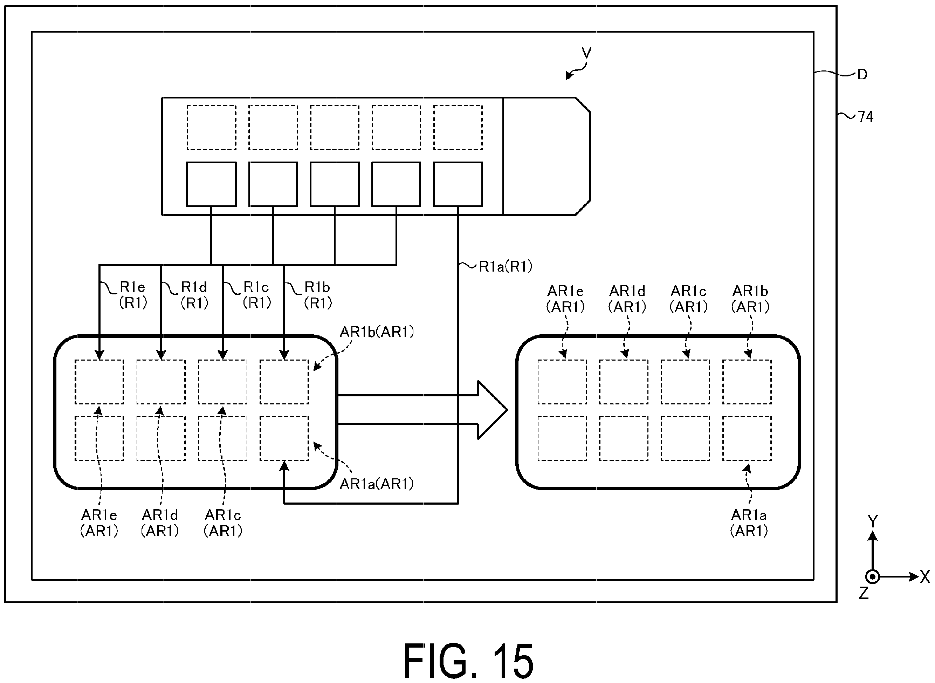

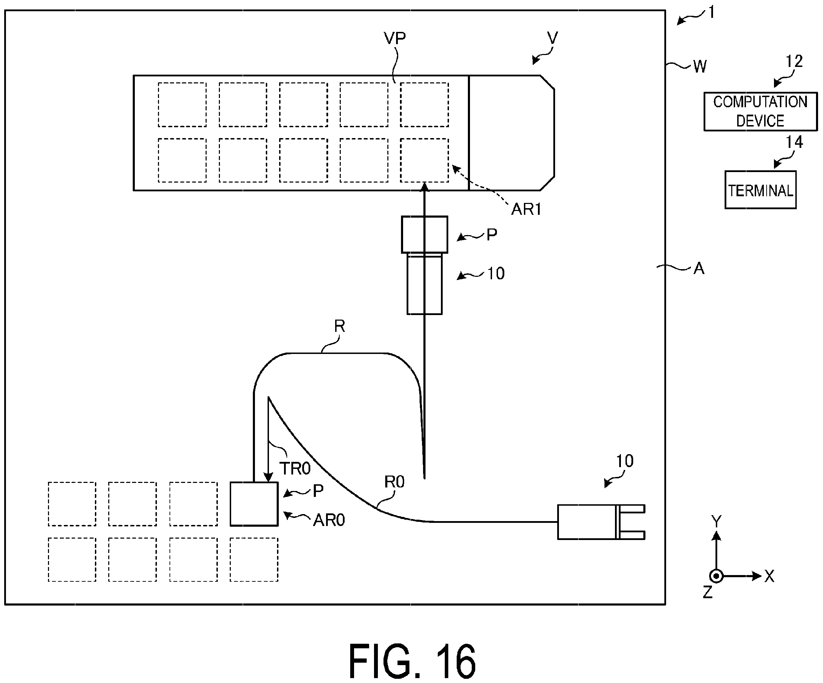

FIG. 15 is a diagram illustrating an image in a case where a transport destination of the target object is designated. Based on the initial designation information, the computation device 12 designates the transport destination area AR1 (transport destination) of the target object P, acquires the proposed transport route R1 to the designated transport destination area AR1, and outputs the proposed transport route R1 to the terminal 14. As illustrated in FIG. 16, the terminal 14 displays the proposed transport route R1 to the designated transport destination area AR1 on the screen D. In this example, the user may perform operation to change the transport destination area AR1 (transport destination). For example, the user selects the transport destination area AR1 to be changed on the screen D, and the changed transport destination area AR1 (transport destination) is designated. The user can select a plurality of transport destination areas AR1 thereby changing the positions of the plurality of transport destination areas AR1. When the user makes an input indicating that the position of the transport destinations of a plurality of target objects P are to be changed at one time, the designated work information acquisition unit 80 of the terminal 14 acquires the information of the changed positions of the transport destinations designated by the user, that is, the position information of the transport destinations of the plurality of target objects P changed at one time as the designated work information, and outputs the designated work information to the computation device 12. The computation device 12 acquires the proposed transport route R1 set for the changed position of the transport destination, and outputs the acquired proposed transport route R1 to the terminal 14. The terminal 14 switches the proposed transport route R1 to the transport destination before the change to the proposed transport route R1 to the transport destination after the change, and displays the proposed transport route R1 after the change.

Effect

As described above, the terminal 14 includes: the designated work information acquisition unit 80 (first acquisition unit) that acquires the designated work information indicating the work details of the movable body 10 input from the user; the output unit 90 that outputs the designated work information to an external device (the movable body 10 or the computation device 12 herein); the set work information acquisition unit 82 (second acquisition unit) that acquires, from the external device (the movable body 10 or the computation device 12 herein), the set work information indicating the work details of the movable body 10 generated based on the designated work information; and the display control unit 88 that causes the display unit 74 to display the set work information. In many cases, the details of the work performed by the movable body 10 is preset or automatically set. However, work different from the work details preset or automatically determined may be required, or the automatic determination of the work details may be difficult in the first place. In view of this, the terminal 14 according to the present embodiment acquires the designated work information designated by the user, and outputs the information to the movable body 10, the computation device 12, or the like. The movable body 10 or the computation device 12 generates the set work information indicating the details of the work to be performed based on the designated work information, and outputs the set work information to the terminal 14. The user checks the set work information displayed on the terminal 14, and the movable body 10 performs the work automatically. According to the present embodiment, the work performed by the movable body 10 is thus determined based on the designation by the user. Thus, the details of the work performed by the movable body 10 can be appropriately set reflecting the designation by the user.

The designated work information acquisition unit 80 acquires the information of the target object P transported by the movable body 10 and the information of the transport destination of the target object P (that is, the initial designation information), as the designated work information. Thus, the movable body 10 can perform the work of transporting the target object P designated by the user to the transport destination designated by the user. Thus, according to the present embodiment, the details of the work performed by the movable body 10 can be appropriately set reflecting the instruction from the user.

When the user makes an input to change the positions of the transport destinations of a plurality of target objects P at one time, the designated work information acquisition unit 80 acquires the position information of the transport destinations of the plurality of target objects P changed at one time, as the designated work information. According to the present embodiment, a flexible instruction from the user can be accepted, whereby the work details to be executed by the movable body 10 can be appropriately set reflecting the designation by the user.

The designated work information acquisition unit 80 acquires, as the designated work information, information of the designated transport route R2 including the transport route R for the target object P on which the movable body 10 travels. The set work information acquisition unit 82 acquires, as the set work information, information of the set transport route R3 including the transport route R generated based on the information of the designated transport route R2. Thus, the movable body 10 can transport the target object P on the set transport route R3 calculated based on the transport route designated by the user. Thus, according to the present embodiment, the details of the work performed by the movable body 10 can be appropriately set reflecting the instruction from the user. The designated transport route R2 is a route roughly designated by the user. Thus, by using the set transport route R3 based on the designated transport route R2 instead of directly using the designated transport route R2, an appropriate transport route can be set that corresponds to the situation of the facility W and the performance of the movable body 10 while reflecting the instruction from the user.

The terminal 14 further includes the proposed work information acquisition unit 84 (third acquisition unit). The proposed work information acquisition unit 84 acquires, before the movable body 10 starts the transport, information of the proposed transport route R1 which is the transport route R proposed to the user from an external device (the computation device 12 or the movable body 10). When the information of the proposed transport route R1 is acquired, the designated work information acquisition unit 80 acquires, as the designated work information, information of the designated transport route R2 obtained by correcting the proposed transport route R1. According to the present embodiment, the proposed transport route R1 preset automatically is proposed to the user via the terminal 14 before the user issues an instruction, whereby the load on the user for designating the transport route R can be reduced.

The terminal 14 further includes the reset request acquisition unit 86 (fourth acquisition unit) that acquires information (reset request information) indicating a request for resetting the transport route R from an external device (the movable body 10 or the computation device 12). Upon acquiring the reset request information, the designated work information acquisition unit 80 acquires the information of the designated transport route R2. According to the present embodiment, the user can correct the transport route R while the work performed by the movable body 10 is in progress, whereby the details of the work performed by the movable body 10 can be appropriately set.

The designated work information acquisition unit 80 acquires, as the designated work information, the information designating the transport order of a plurality of target objects P transported by the movable body 10. According to the present embodiment, the user can designate the transport order, whereby the details of the work performed by the movable body 10 can be appropriately set.

The designated work information acquisition unit 80 acquires, as the designated work information, the information indicating the transport method for the target object P transported by the movable body 10. According to the present embodiment, the user can designate the transport method, whereby the details of the work performed by the movable body 10 can be appropriately set.

The designated work information acquisition unit 80 acquires, as the information indicating the transport method for the target object, information indicating whether the target object P is picked up by side shift which moves the fork 24 of the movable body 10 in the lateral direction. According to the present embodiment, the user can also instruct the side shift, whereby the details of the work performed by the movable body 10 can be appropriately set.

The display control unit 88 causes the display unit 74 to display an image indicating the transport method for the target object P (the transport method image PT2) in response to the operation of the user on the terminal 14. According to the present embodiment, the transport method image PT2 is displayed in response to an operation by the user, whereby the user can easily designate the transport method.

The control system 1 according to the present embodiment includes the terminal 14 and the movable body 10 that performs work based on the set work information. With this control system 1, the details of the work performed by the movable body 10 can be appropriately set reflecting the instruction from the user.

The movable body 10 may set the set work information based on the designated work information, and output the set work information thus set to the terminal 14. With this control system 1, the work details are set through communications between the movable body 10 and the terminal 14, whereby the details of the work performed by the movable body 10 can be swiftly set.

The movable body 10 sets, as the set work information, the set transport route R3 that is the transport route for the target object P. With this control system 1, the movable body 10 sets the set transport route R3, and thus the transport route can be swiftly set.

When the designated work information includes information of the orientation of the target object P, the movable body 10 sets the set transport route R3 based on the orientation of the target object P. With this control system 1, the set transport route R3 is set based on the orientation of the target object P, whereby the transport route can be appropriately set in accordance with the orientation of the target object P.

The movable body 10 sets the set transport route using model predictive control. With this control system 1, the model predictive control is used so that the transport route can be appropriately set.

The movable body 10 calculates a plurality of routes as candidates of the transport route for the target object P, and sets, as the set transport route R3, a route closest to the designated transport route R2 that is the transport route designated by the user, among the plurality of routes. With this control system 1, the transport route appropriately reflecting the intention of the user can be set.

When the transport route (designated transport route R2) is not designated for the target object P by the user, the movable body 10 sets as the set transport route R3, the proposed transport route R1 that is the preset transport route. With this control system 1, when the user accepts the proposed transport route R1, the proposed transport route R1 is set as the set transport route R3, and thus the transport route can be appropriately set.

When the set transport route R3 is not accepted by the user, the movable body 10 updates and sets the set transport route R3 based on the transport route newly designated by the user (designated transport route R2). With this control system 1, the transport route appropriately reflecting the intention of the user can be set.

The movable body 10 can switch between the first mode and the second mode. Under the first mode, the set transport route R3 is set based on the designated transport route R2 that is the transport route for the target object P designated by the user. Under the second mode, the set transport route R3 is automatically set without being based on the designated transport route R2. With this control system 1, the mode can be switched based on the user's confidence in the control system 1, whereby the appropriate transport route can be set in accordance with the intention of the user.

Upon detecting an obstacle while traveling, the movable body 10 outputs the reset request information requesting the user to reset the transport route, to the terminal 14. With this control system 1, the user sets the route circumventing the obstacle, whereby an appropriate route circumventing the obstacle can be set.

Upon detecting an obstacle while traveling, the movable body 10 generates a new transport route for circumventing the obstacle, switches to the new transport route, and travels on the transport route. With this control system 1, the route circumventing the obstacle is automatically set, whereby an appropriate route for circumventing the obstacle while reducing a load on the user can be set.

The control system 1 may further include the computation device 12 that sets the set work information based on the designated work information, and outputs the set work information set. With this control system 1, the details of the work is set on the side of the computation device 12, whereby the calculation load on the movable body 10 can be reduced.

The control system 1 may further include the computation device 12 that sets the prohibited route on which the movable body 10 is prohibited from traveling. With this control system 1, the prohibited route is set so that the collision between the movable bodies 10 can be prevented.

The computation device 12 sets as the prohibited route, a route close to the route on which another movable body is scheduled to travel. With this control system 1, the prohibited route is thus set so that the collision between the movable bodies 10 can be prevented.

When at least a part of the set transport route R3 that is a route on which the movable body 10 transports the target object P is set as the prohibited route, the computation device 12 does not cause the movable body 10 to start traveling until the setting of the prohibited route is released. With this control system 1, the traveling of the movable body 10 on the prohibited route is prohibited, whereby collision between the movable bodies 10 can be prevented.

A control method according to the present embodiment includes: acquiring the designated work information indicating details of the work performed by the movable body 10 input from the user; outputting the designated work information to an external device; acquiring, from the external device, the set work information indicating details of the work performed by the movable body 10 generated based on the designated work information; and displaying the set work information on the display unit 74. With this control method, the details of the work performed by the movable body 10 can be appropriately set reflecting the instruction from the user.

A program according to the present embodiment causes a computer to execute: acquiring the designated work information, indicating details of work performed by the movable body 10, input from the user; outputting the designated work information to an external device; acquiring the set work information indicating the details of the work performed by the movable body 10 generated based on the designated work information, from the external device; and displaying the set work information on the display unit 74. With this program, the details of the work performed by the movable body 10 can be appropriately set reflecting the instruction from the user.

Second Embodiment

Next, a second embodiment will be described. The second embodiment differs from the first embodiment in that the target object P is loaded onto the vehicle V. Parts of the second embodiment with configurations that are the same as those in the first embodiment will not be described.

FIG. 16 is a schematic view of a control system according to at least one embodiment of the present disclosure. As illustrated in FIG. 16, in the second embodiment, the movable body 10 transports the target object P placed in the placement area ARC of the facility W to the transport destination area AR1 in the loading platform PV of the vehicle V. The movable body 10 approaches the target object P in the placement area ARC in accordance with the approach route R0 and the approach trajectory TR0. The movable body 10 picks up the target object P in the placement area AR0, transports the target object P to the transport destination area AR1 of the vehicle V in accordance with the transport route R, and loads the target object P in the transport destination area AR1. The method for setting the approach route R0 and the approach trajectory TRO is the same as that in the first embodiment, and thus will not be described.

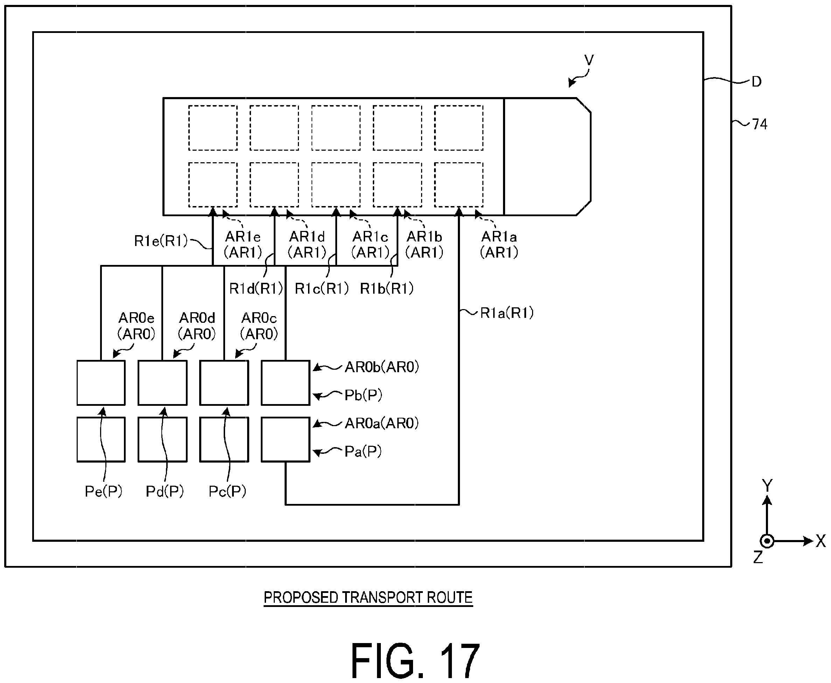

FIG. 17 is a schematic view illustrating an example of a proposed transport route displayed on the display unit. As illustrated in FIG. 17, the terminal 14 causes the screen D of the display unit 74 to display an image of the vehicle V, an image of the placement area ARC in the vehicle V, an image of the target object P, an image of the transport destination area AR1, and an image of the proposed transport route R1. The proposed transport route R1 as the proposed work information is the transport route R acquired by the computation device 12 as the route from the placement area ARC of the facility W to the transport destination area AR1 of the vehicle V. The method of acquiring the transport destination area AR1 is the same as that in the first embodiment, and thus will not be described.

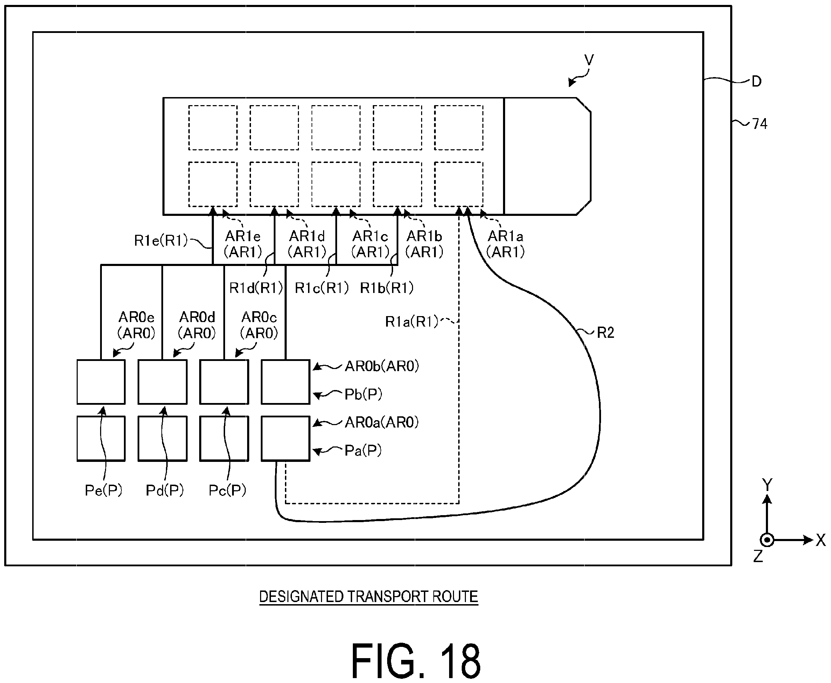

FIG. 18 is a schematic view illustrating an example of a proposed transport route displayed on the display unit. As illustrated in FIG. 18, upon acquiring the proposed transport route R1 and displaying the proposed transport route R1 on the screen D, the terminal 14 acquires the designated transport route R2 as the designated work information, and displays the designated transport route R2 on the screen D. The designated transport route R2 is the transport route R input from the user. The method of acquiring the designated transport route R2 is the same as that in the first embodiment, and will not be described.

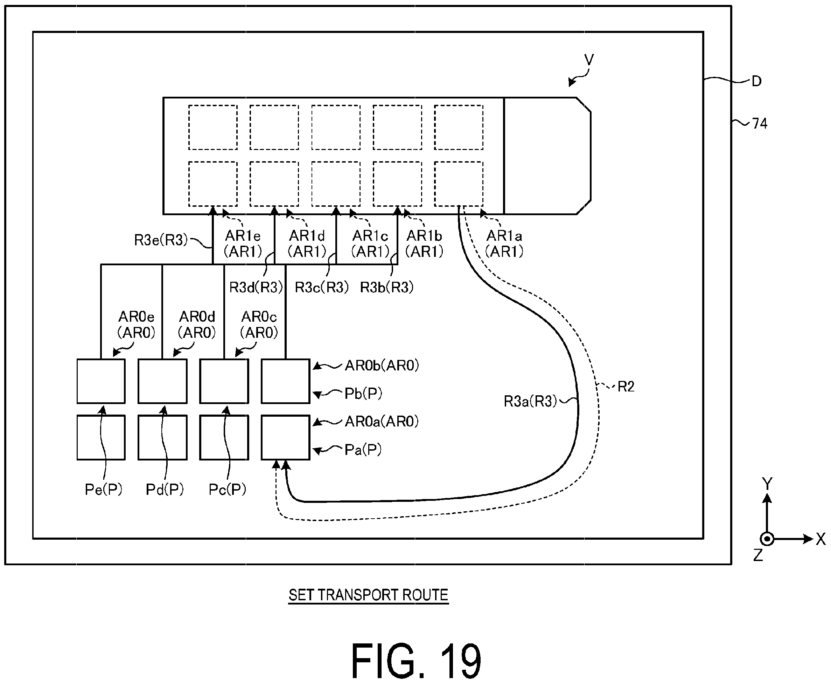

FIG. 19 is a schematic view illustrating an example of a set transport route displayed on the display unit. As illustrated in FIG. 19, the terminal 14 causes the screen D to display the set transport route R3 as the set work information. The set transport route R3 is the transport route R set by the movable body 10 or the computation device 12 based on the designated transport route R2. The method of acquiring the set transport route R3 is the same as that in the first embodiment, and will not be described.

As described above, the control system 1 can also be applied to a case where the target object P is loaded on the vehicle V.


Reference Signs List


1 Control system
10 Movable body
12 Computation Device
14 Terminal
74 Display unit
80 Designated work information acquisition unit (an example of first acquisition unit)
82 Set work information acquisition unit (an example of second acquisition unit)
84 Proposed work information acquisition unit (an example of third acquisition unit)
86 Reset request acquisition unit (an example of fourth acquisition unit)
88 Display control unit
90 Output unit
ARC Placement area
AR1 Transport destination area
P Target Object
R Transport route
R0 Approach route
R1 Proposed transport route
R2 Designated transport route
R3 Set transport route
TRO Approach trajectory


**Claims**

1. A control system (1) comprising:
    a terminal (14) operated by a user comprising:

    a first acquisition unit (80) configured to acquire designated work information which includes information designating target object (P) to be transported and information designating a transport destination of the target object (P), indicating details of work performed by a movable body (10), such details including information of the target object (P) unloaded from a vehicle V, information of the transport destination area AR1 in which the target object (P) is placed and information of the transport route R on which the target object P is transported;
    an output unit (90) configured to output the designated work information to a computation device (12);
    a second acquisition unit (82) configured to acquire, from the computation device (12), set work information which is information of the set transport route (R3) including the transport route generated based on the information **of a** transport route (R2) designated by the user, indicating the details of the work performed by the movable body (10) generated based on the designated work information; and
    a display control unit configured to display the set work information on a display unit (74);

the computation device (12) configured to set the set work information based on the designated work information, and output the set work information set; and

the movable body (10) configured to perform work based on the set work information.

2. The control system (1) according to claim 1, wherein when the user makes an input to change positions of transport destinations of a plurality of the target objects (P) at one time, the first acquisition unit (80) acquires position information of the transport destinations of the plurality of target objects (P) changed at one time, as the designated work information.

3. The control system (1) according to claims 1 or 2, wherein

the first acquisition unit (80) acquires, as the designated work information, information of a designated transport route including a transport route on which the movable body (10) transports the target object (P), and

the second acquisition unit (82) acquires, as the set work information, information of set transport route including the transport route generated based on the information of the designated transport route.

4. The control system (1) according to claim 3 further comprising a third acquisition unit (84) configured to acquire, before the movable body (10) starts transporting, information of a proposed transport route that is the transport route proposed to the user, from the computation device (12), wherein when the information of the proposed transport route is acquired, the first acquisition unit (80) acquires, as the designated work information, information of the designated transport route obtained by correcting the proposed transport route.

5. The control system (1) according to claim 3 or 4 further comprising a fourth acquisition unit (86) configured to acquire, from the computation device (12), reset request information indicating a request for resetting the transport route, while transport by the movable body (10) is in progress, wherein when the reset request information is acquired, the first acquisition unit (80) acquires the information of the designated transport route.

6. The control system (1) according to any one of claims 1 to 5, wherein the first acquisition unit (80) acquires, as the designated work information, information designating a transport order of a plurality of target objects (P) transported by the movable body (10).

7. The control system (1) according to any one of claims 1 to 6, wherein the first acquisition unit (80) acquires, as the designated work information, information indicating a transport method for a target object (P) transported by the movable body (10).

8. The control system (1) according to claim 7, wherein the first acquisition unit (80) acquires, as the information indicating the transport method for the target object (P), information indicating whether the target object (P) is picked up using side shift for moving a fork of the movable body (10) in a lateral direction.

9. The control system (1) according to claim 7 or 8, wherein the display control unit causes the display unit (74) to display an image indicating the transport method for the target object (P), in response to operation on the terminal (14) by the user.

10. The control system (1) according to any one of claims 1 to 9, wherein the movable body (10) sets the set work information based on the designated work information, and outputs the set work information set to the terminal.

11. The control system (1) according to any one of claims 1 to 10, wherein the movable body (10) sets, as the set work information, a set transport route that is a transport route for the target object (P).

12. The control system (1) according to claim 11, wherein when the designated work information includes information of an orientation of the target object (P), the movable body (10) sets the set transport route based on the orientation of the target object (P).

13. The control system (1) according to claim 12, wherein the movable body (10) sets the set transport route using model predictive control.

14. The control system (1) according to any one of claims 11 to 13, wherein the movable body (10) calculates a plurality of routes as candidates of the transport route for the target object (P), and sets, as the set transport route, a route closest to the designated transport route that is a transport route designated by the user, among the plurality of routes.

15. The control system (1) according to any one of claims 11 to 14, wherein when the transport route for the target object (P) is not designated by the user, the movable body (10) sets, as the set transport route, a proposed transport route that is a preset transport route.

16. The control system (1) according to any one of claims 11 to 15, wherein when the set transport route is not accepted by the user, the movable body (10) updates and sets the set transport route based on a transport route newly designated by the user.

17. The control system (1) according to any one of claims 11 to 16, wherein the movable body (10) is configured to switch between a first mode under which the set transport route is set based on the designated transport route that is the transport route for the target object (P) designated by the user and a second mode under which the set transport route is automatically set without being based on the designated transport route.

18. The control system (1) according to any one of claims 11 to 17, wherein upon detecting an obstacle while traveling, the movable body (10) outputs, to the terminal, reset request information requesting the user to reset the transport route.

19. The control system (1) according to any one of claims 11 to 18, wherein upon detecting an obstacle while traveling, the movable body (10) generates a new transport route for circumventing the obstacle, switches to the new transport route, and travels on the new transport route.

20. The control system (1) according to any one of claims 1 to 19, wherein the computation device (12) configured to set a prohibited route on which the movable body (10) is prohibited from traveling.

21. The control system (1) according to claim 20, wherein the computation device (12) sets, as the prohibited route, a route close to a route on which another movable body (10) is scheduled to travel.

22. The control system (1) according to claim 20 or 21, wherein when at least a part of the set transport route that is a route on which the movable body (10) transports the target object (P) is set as the prohibited route, the computation device (12) does not cause the movable body (10) to start traveling until the setting of the prohibited route is released.

23. A control method comprising:

    acquiring from a user designated work information which includes information designating target object (P) to be transported, information designating a transport destination of the target object (P), indicating details of work performed by a movable body (10) input, such details including information of the target object (P) unloaded from a vehicle V, information of the transport destination area AR1 in which the target object (P) is placed and information of the transport route R on which the target object P is transported;;
    outputting the designated work information to a computation device (12);
    setting the set work information based on the designated work information, and output the set work information set;
    acquiring, from the computation device (12), set work information which is information of the set transport route (R3) including the transport **route generated based on the information of a transport route (R2)** designated by the user, indicating the details of the work performed by the movable body (10) generated based on the designated work information ;
    displaying the set work information on a display unit (74); and
    making the movable body (10) perform the work based on the set work information.

24. A program causing a computer to execute a control method comprising:

    acquiring from a user designated work information which includes information designating target object (P) to be transported and information designating a transport destination of the target object (P), indicating details of work performed by a movable body (10), input from the user;
    outputting the designated work information to a computation device (12);
    setting the set work information based on the designated work information, and output the set work information set;

acquiring, from the computation device (12), set work information which is information of the set transport route (R3) including the transport route generated based on the information of a transport route (R2) designated by the user, indicating the details of the work performed by the movable body (10) generated based on the designated work information;

displaying the set work information on a display unit (74);

and making the movable body (10) perform the work based on the set work information.

**Patentansprüche**

1.  Steuerungs- bzw. Regelungssystem (1), umfassend:

    ein Terminal (14), das von einem Benutzer bedient wird, umfassend:

    eine erste Erfassungseinheit (80), die konfiguriert ist, designierte Arbeitsinformationen zu erfassen, die Informationen, die ein zu transportierendes Zielobjekt (P) bezeichnen, und Informationen beinhalten, die ein Transportziel des Zielobjekts (P) bezeichnen, die Details der von einem beweglichen Körper (10) durchgeführten Arbeit angeben, wobei solche Details Informationen über das von einem Fahrzeug V entladene Zielobjekt (P), Informationen über den Transportzielbereich AR1, in dem das Zielobjekt (P) platziert wird, und Informationen über die Transportroute R, auf der das Zielobjekt P transportiert wird, beinhalten;

    eine Ausgabeeinheit (90), die konfiguriert ist, die designierten Arbeitsinformationen an eine Rechenvorrichtung (12) auszugeben;

    eine zweite Erfassungseinheit (82), die konfiguriert ist, von der Rechenvorrichtung (12) festgelegte Arbeitsinformationen zu erfassen, bei denen es sich um Informationen über die festgelegte Transportroute (R3) handelt, einschließlich der Transportroute, die basierend auf den Informationen einer Transportroute (R2) generiert wird, die durch den Benutzer bestimmt wird, was die Details der von dem beweglichen Körper (10) durchgeführten Arbeit angibt, die basierend auf den designierten Arbeitsinformationen generiert werden bzw. wird; und

    eine Anzeigesteuerungs- bzw. -regelungseinheit, die konfiguriert ist, die festgelegten Arbeitsinformationen auf einer Anzeigeeinheit (74) anzuzeigen;

    wobei die Rechenvorrichtung (12) konfiguriert ist, die festgelegten Arbeitsinformationen basierend auf den designierten Arbeitsinformationen festzulegen und den festgelegten Arbeitsinformationssatz ausgeben; und

    wobei der bewegliche Körper (10) konfiguriert ist, eine Arbeite basierend auf den festgelegten Arbeitsinformationen durchzuführen.

2.  Steuerungs- bzw. Regelungssystem (1) nach Anspruch 1, wobei, wenn der Benutzer eine Eingabe macht, um Positionen von Transportzielen einer Mehrzahl der Zielobjekte (P) gleichzeitig zu ändern, die erste Erfassungseinheit (80) Positionsinformationen über die Transportziele der Mehrzahl von Zielobjekten (P), die sich gleichzeitig geändert werden, als die designierten Arbeitsinformationen erfasst.

3.  Steuerungs- bzw. Regelungssystem (1) nach Anspruch 1 oder 2, wobei die erste Erfassungseinheit (80) als die designierten Arbeitsinformationen Informationen über eine designierte Transportroute einschließlich einer Transportroute erfasst, auf der der bewegliche Körper (10) das Zielobjekt (P) transportiert, und

    die zweite Erfassungseinheit (82) als die designierten Arbeitsinformationen Informationen über die festgelegte Transportroute einschließlich der Transportroute erfasst, die basierend auf den Informationen über die designierte Transportroute generiert wird.

4.  Steuerungs- bzw. Regelungssystem (1) nach Anspruch 3, ferner umfassend eine dritte Erfassungseinheit (84), die konfiguriert ist, bevor der bewegliche Körper (10) mit dem Transport beginnt, Informationen über eine vorgeschlagene Transportroute, bei der es sich um die dem Benutzer vorgeschlagene Transportroute handelt, von der Rechenvorrichtung (12) zu erfassen, wobei wenn die Informationen über die vorgeschlagene Transportroute erfasst werden, die erste Erfassungseinheit (80) als die designierten Arbeitsinformationen Informationen über die designierte Transportroute erfasst, die durch Korrektur der vorgeschlagenen Transportroute erhalten werden.

5.  Steuerungs- bzw. Regelungssystem (1) nach Anspruch 3 oder 4, ferner umfassend eine vierte Erfassungseinheit (86), die konfiguriert ist, von der Rechenvorrichtung (12) Rücksetzanforderungsinformationen zu erfassen, die eine Anforderung zum Zurücksetzen der Transportroute angeben, und zwar während der Transport durch den beweglichen Körper (10) im Gang ist, wobei beim Erfassen der Rücksetzanforderungsinformationen die erste Erfassungseinheit (80) die Informationen über die designierte Transportroute erfasst.

6. Steuerungs- bzw. Regelungssystem (1) nach einem der Ansprüche 1 bis 5, wobei die erste Erfassungseinheit (80) als die designierten Arbeitsinformationen Informationen erfasst, die eine Transportreihenfolge einer Mehrzahl von Zielobjekten (P) bezeichnen, die von dem beweglichen Körper (10) transportiert werden.

7. Steuerungs- bzw. Regelungssystem (1) nach einem der Ansprüche 1 bis 6, wobei die erste Erfassungseinheit (80) als die designierten Arbeitsinformationen Informationen erfasst, die eine Transportmethode für ein Zielobjekt (P) angeben, das von dem beweglichen Körper (10) transportiert wird.

8. Steuerungs- bzw. Regelungssystem (1) nach Anspruch 7, wobei die erste Erfassungseinheit (80) als die Informationen, die die Transportmethode für das Zielobjekt (P) angeben, Informationen erfasst, die angeben, ob das Zielobjekt (P) unter Verwenden einer Seitenverschiebung zum Bewegen einer Gabel des beweglichen Körpers (10) in einer lateral Richtung aufgenommen wird.

9. Steuerungs- bzw. Regelungssystem (1) nach Anspruch 7 oder 8, wobei die Anzeigesteuerungs- bzw. -regelungseinheit die Anzeigeeinheit (74) veranlasst, ein Bild, das die Transportmethode für das Zielobjekt (P) angibt, als Antwort auf eine Bedienung an dem Terminal (14) durch den Nutzer anzuzeigen.

10. Steuerungs- bzw. Regelungssystem (1) nach einem der Ansprüche 1 bis 9, wobei der bewegliche Körper (10) die festgelegten Arbeitsinformationen basierend auf den designierten Arbeitsinformationen festlegt und die festgelegten Arbeitsinformationen an das Terminal ausgibt.

11. Steuerungs- bzw. Regelungssystem (1) nach einem der Ansprüche 1 bis 10, wobei der bewegliche Körper (10) als die festgelegten Arbeitsinformationen eine festgelegte Transportroute festlegt, die eine Transportroute für das Zielobjekt (P) ist.

12. Steuerungs- bzw. Regelungssystem (1) nach Anspruch 11, wobei, wenn die designierten Arbeitsinformationen Informationen über eine Ausrichtung des Zielobjekts (P) beinhalten, der bewegliche Körper (10) die festgelegte Transportroute basierend auf der Ausrichtung des Zielobjekts (P) festlegt.

13. Steuerungs- bzw. Regelungssystem (1) nach Anspruch 12, wobei der bewegliche Körper (10) die festgelegte Transportroute unter Verwendung modellprädiktiver Steuerung bzw. Regelung festlegt.

14. Steuerungs- bzw. Regelungssystem (1) nach einem der Ansprüche 11 bis 13, wobei der bewegliche Körper (10) eine Mehrzahl von Routen als Kandidaten für die Transportroute für das Zielobjekt (P) berechnet und als die festlegte Transportroute eine Route festlegt, die der designierten Transportroute am nächsten ist, die eine von dem Benutzer angegebene Transportroute aus der Mehrzahl von Routen ist.

15. Steuerungs- bzw. Regelungssystem (1) nach einem der Ansprüche 11 bis 14, wobei, wenn die Transportroute für das Zielobjekt (P) nicht von dem Benutzer angegeben wird, der bewegliche Körper (10) als die festgelegte Transportroute eine vorgeschlagene Transportroute festlegt, die eine voreingestellte Transportroute ist.

16. Steuerungs- bzw. Regelungssystem (1) nach einem der Ansprüche 11 bis 15, wobei, wenn die festgelegte Transportroute von dem Benutzer nicht akzeptiert wird, der bewegliche Körper (10) die festgelegte Transportroute basierend auf Transportroute aktualisiert und festlegt, die von dem Benutzer neu angegeben wird.

17. Steuerungs- bzw. Regelungssystem (1) nach einem der Ansprüche 11 bis 16, wobei der bewegliche Körper (10) so konfiguriert ist, dass er zwischen einem ersten Modus, in dem die festgelegte Transportroute basierend auf der designierten Transportroute festgelegt wird, welche die Transportroute für das Zielobjekt (P) ist, die von dem Benutzer angegeben wird, und einem zweiten Modus umschaltet, in dem die festgelegte Transportroute automatisch festgelegt wird, ohne auf der designierten Transportroute zu basieren.

18. Steuerungs- bzw. Regelungssystem (1) nach einem der Ansprüche 11 bis 17, wobei beim Erkennen eines Hindernisses während der Fahrt der bewegliche Körper (10) Rücksetzanforderungsinformationen an das Terminal ausgibt, die den Benutzer auffordern, die Transportroute zurückzusetzen.

19. Steuerungs- bzw. Regelungssystem (1) nach einem der Ansprüche 11 bis 18, wobei beim Erkennen eines Hindernisses während der Fahrt der bewegliche Körper (10) eine neue Transportroute zum Umgehen des Hindernisses generiert, auf die neue Transportroute umschaltet und auf der neuen Transportroute fährt.

**20.** Steuerungs- bzw. Regelungssystem (1) nach einem der Ansprüche 1 bis 19, wobei die Rechenvorrichtung (12) konfiguriert ist, eine verbotene Route festzulegen, auf der es dem beweglichen Körper (10) verboten ist, zu fahren.

**21.** Steuerungs- bzw. Regelungssystem (1) nach Anspruch 20, wobei die Rechenvorrichtung (12) als die verbotene Route eine Route festlegt, die nahe an einer Route liegt, auf der ein anderer beweglicher Körper (10) fahren soll.

**22.** Steuerungs- bzw. Regelungssystem (1) nach Anspruch 20 oder 21, wobei, wenn zumindest ein Teil der festgelegten Transportroute, die eine Route ist, auf der der bewegliche Körper (10) das Zielobjekt (P) transportiert, als die verbotene Route festgelegt ist, die Rechenvorrichtung (12) den beweglichen Körper (10) nicht veranlasst, mit der Fahrt zu beginnen, bis die Festlegung der verbotenen Route freigegeben ist.

**23.** Steuerungs- bzw. Regelungsverfahren, umfassend:

Erfassen, von einem Benutzer, eingegebener designierter Arbeitsinformationen, die Informationen, die ein zu transportierendes Zielobjekt (P) bezeichnen, Informationen beinhalten, die ein Transportziel des Zielobjekts (P) bezeichnen, die Details der von einem beweglichen Körper (10) durchgeführten Arbeit angeben, wobei solche Details Informationen über das von einem Fahrzeug V entladene Zielobjekt (P), Informationen über den Transportzielbereich AR1, in dem das Zielobjekt (P) platziert wird, und Informationen über die Transportroute R, auf der das Zielobjekt P transportiert wird, beinhalten;
Ausgeben der designierten Arbeitsinformationen an eine Rechenvorrichtung (12);
Festlegen der festgelegten Arbeitsinformationen basierend auf den designierten Arbeitsinformationen und Ausgeben des festgelegten Arbeitsinformationssatzes;
Erfassen, von der Rechenvorrichtung (12), festgelegter Arbeitsinformationen, bei denen es sich um Informationen über die festgelegte Transportroute (R3) handelt, einschließlich der Transportroute, die basierend auf den Informationen einer Transportroute (R2) generiert wird, die durch den Benutzer bestimmt wird, was die Details der von dem beweglichen Körper (10) durchgeführten Arbeit angibt, die basierend auf den designierten Arbeitsinformationen generiert werden bzw. wird;
Anzeigen der festgelegten Arbeitsinformationen auf einer Anzeigeeinheit (74); und
Veranlassen des beweglichen Körpers (10), die Arbeit basierend auf den festgelegten Arbeitsinformationen auszuführen.

**24.** Programm, das einen Computer veranlasst, ein Steuerungs- bzw. Regelungsverfahren auszuführen, umfassend:

Erfassen, von einem Benutzer, designierter Arbeitsinformationen, die Informationen, die ein zu transportierendes Zielobjekt (P) bezeichnen, und Informationen beinhalten, die ein Transportziel des Zielobjekts (P) bezeichnen, die Details der von einem beweglichen Körper (10) durchgeführten Arbeit angeben, und zwar eingegeben von einem Benutzer;
Ausgeben der designierten Arbeitsinformationen an eine Rechenvorrichtung (12);
Festlegen der festgelegten Arbeitsinformationen basierend auf den designierten Arbeitsinformationen und Ausgeben des festgelegten Arbeitsinformationssatzes;
Erfassen, von der Rechenvorrichtung (12), festgelegter Arbeitsinformationen, bei denen es sich um Informationen über die festgelegte Transportroute (R3) handelt, einschließlich der Transportroute, die basierend auf den Informationen einer Transportroute (R2) generiert wird, die durch den Benutzer bestimmt wird, was die Details der von dem beweglichen Körper (10) durchgeführten Arbeit angibt, die basierend auf den designierten Arbeitsinformationen generiert werden bzw. wird;
Anzeigen der festgelegten Arbeitsinformationen auf einer Anzeigeeinheit (74); und
Veranlassen des beweglichen Körpers (10), die Arbeit basierend auf den festgelegten Arbeitsinformationen auszuführen.

## Revendications

**1.** Système de commande (1) comprenant :
un terminal (14) exploité par un utilisateur comprenant :

une première unité d'acquisition (80) configurée pour acquérir des informations de travail désignées qui incluent des informations désignant un objet cible (P) à transporter et des informations désignant une destination de transport de l'objet cible (P), indiquant des détails d'un travail réalisé par un corps mobile (10), de tels détails incluant des informations de l'objet cible (P) déchargé depuis un véhicule V, des informations de la zone de destination de transport AR1 dans laquelle l'objet cible (P) est placé et des informations de l'itinéraire de transport R sur lequel l'objet cible P est transporté ;

une unité de sortie (90) configurée pour délivrer les informations de travail désignées à un dispositif de calcul (12) ;

une deuxième unité d'acquisition (82) configurée pour acquérir, depuis le dispositif de calcul (12), des informations de travail réglées qui sont des informations sur l'itinéraire de transport réglé (R3) incluant l'itinéraire de transport généré sur la base des informations d'un itinéraire de transport (R2) désigné par l'utilisateur, indiquant les détails du travail réalisé par le corps mobile (10) générés sur la base des informations de travail désignées ; et

une unité de commande d'affichage configurée pour afficher les informations de travail réglées sur une unité d'affichage (74) ;

le dispositif de calcul (12) étant configuré pour régler les informations de travail réglées sur la base des informations de travail désignées, et délivrer les informations de travail réglées qui ont été réglées ; et

le corps mobile (10) étant configuré pour réaliser un travail sur la base des informations de travail réglées.

2. Système de commande (1) selon la revendication 1, dans lequel, lorsque l'utilisateur effectue une entrée pour changer des positions de destinations de transport d'une pluralité des objets cibles (P) à la fois, la première unité d'acquisition (80) acquiert des informations de position des destinations de transport de la pluralité d'objets cibles (P) changées à la fois, en tant que les informations de travail désignées.

3. Système de commande (1) selon la revendication 1 ou 2, dans lequel la première unité d'acquisition (80) acquiert, en tant que les informations de travail désignées, des informations d'un itinéraire de transport désigné incluant un itinéraire de transport sur lequel le corps mobile (10) transporte l'objet cible (P), et

la deuxième unité d'acquisition (82) acquiert, en tant que les informations de travail réglées, des informations d'itinéraire de transport réglé incluant l'itinéraire de transport généré sur la base des informations de l'itinéraire de transport désigné.

4. Système de commande (1) selon la revendication 3, comprenant en outre une troisième unité d'acquisition (84) configurée pour acquérir, avant le début du transport par le corps mobile (10), des informations d'un itinéraire de transport proposé qui est l'itinéraire de transport proposé à l'utilisateur, depuis le dispositif de calcul (12), dans lequel, lorsque les informations de l'itinéraire de transport proposé sont acquises, la première unité d'acquisition (80) acquiert, en tant que les informations de travail désignées, des informations de l'itinéraire de transport désigné obtenues par la correction de l'itinéraire de transport proposé.

5. Système de commande (1) selon la revendication 3 ou 4, comprenant en outre une quatrième unité d'acquisition (86) configurée pour acquérir, depuis le dispositif de calcul (12), des informations de demande de réinitialisation indiquant une demande de réinitialisation de l'itinéraire de transport, pendant qu'un transport par le corps mobile (10) est en cours, dans lequel, lorsque les informations de demande de réinitialisation sont acquises, la première unité d'acquisition (80) acquiert les informations de l'itinéraire de transport désigné.

6. Système de commande (1) selon l'une quelconque des revendications 1 à 5, dans lequel la première unité d'acquisition (80) acquiert, en tant que les informations de travail désignées, des informations désignant un ordre de transport d'une pluralité d'objets cibles (P) transportés par le corps mobile (10).

7. Système de commande (1) selon l'une quelconque des revendications 1 à 6, dans lequel la première unité d'acquisition (80) acquiert, en tant que les informations de travail désignées, des informations indiquant une méthode de transport pour un objet cible (P) transporté par le corps mobile (10).

8. Système de commande (1) selon la revendication 7, dans lequel la première unité d'acquisition (80) acquiert, en tant que les informations indiquant la méthode de transport pour l'objet cible (P), des informations indiquant si l'objet cible (P) est saisi en utilisant un déport latéral pour déplacer une fourche du corps mobile (10) dans une direction latérale.

9. Système de commande (1) selon la revendication 7 ou 8, dans lequel l'unité de commande d'affichage amène l'unité d'affichage (74) à afficher une image indiquant la méthode de transport pour l'objet cible (P), en réponse à une opération sur le terminal (14) par l'utilisateur.

10. Système de commande (1) selon l'une quelconque des revendications 1 à 9, dans lequel le corps mobile (10) règle les informations de travail réglées sur la base des informations de travail désignées, et délivre les informations de travail réglées qui ont été réglées au terminal.

**11.** Système de commande (1) selon l'une quelconque des revendications 1 à 10, dans lequel le corps mobile (10) règle, en tant que les informations de travail réglées, un itinéraire de transport réglé qui est un itinéraire de transport pour l'objet cible (P).

**12.** Système de commande (1) selon la revendication 11, dans lequel, lorsque les informations de travail désignées incluent des informations d'une orientation de l'objet cible (P), le corps mobile (10) règle l'itinéraire de transport réglé sur la base de l'orientation de l'objet cible (P).

**13.** Système de commande (1) selon la revendication 12, dans lequel le corps mobile (10) règle l'itinéraire de transport réglé en utilisant une commande prédictive de modèle.

**14.** Système de commande (1) selon l'une quelconque des revendications 11 à 13, dans lequel le corps mobile (10) calcule une pluralité d'itinéraires en tant que candidats de l'itinéraire de transport pour l'objet cible (P), et règle, en tant que l'itinéraire de transport réglé, un itinéraire le plus proche de l'itinéraire de transport désigné qui est un itinéraire de transport désigné par l'utilisateur, parmi la pluralité d'itinéraires.

**15.** Système de commande (1) selon l'une quelconque des revendications 11 à 14, dans lequel, lorsque l'itinéraire de transport pour l'objet cible (P) n'est pas désigné par l'utilisateur, le corps mobile (10) règle, en tant que l'itinéraire de transport réglé, un itinéraire de transport proposé qui est un itinéraire de transport préréglé.

**16.** Système de commande (1) selon l'une quelconque des revendications 11 à 15, dans lequel, lorsque l'itinéraire de transport réglé n'est pas accepté par l'utilisateur, le corps mobile (10) met à jour et règle l'itinéraire de transport réglé sur la base d'un itinéraire de transport nouvellement désigné par l'utilisateur.

**17.** Système de commande (1) selon l'une quelconque des revendications 11 à 16, dans lequel le corps mobile (10) est configuré pour commuter entre un premier mode dans lequel l'itinéraire de transport réglé est réglé sur la base de l'itinéraire de transport désigné qui est l'itinéraire de transport pour l'objet cible (P) désigné par l'utilisateur, et un deuxième mode dans lequel l'itinéraire de transport réglé est automatiquement réglé sans être basé sur l'itinéraire de transport désigné.

**18.** Système de commande (1) selon l'une quelconque des revendications 11 à 17, dans lequel, à la détection d'un obstacle pendant le déplacement, le corps mobile (10) délivre, au terminal, des informations de demande de réinitialisation demandant à l'utilisateur de réinitialiser l'itinéraire de transport.

**19.** Système de commande (1) selon l'une quelconque des revendications 11 à 18, dans lequel, à la détection d'un obstacle pendant le déplacement, le corps mobile (10) génère un nouvel itinéraire de transport pour contourner l'obstacle, commute au nouvel itinéraire de transport, et se déplace sur le nouvel itinéraire de transport.

**20.** Système de commande (1) selon l'une quelconque des revendications 1 à 19, dans lequel le dispositif de calcul (12) est configuré pour régler un itinéraire interdit sur lequel le déplacement du corps mobile (10) est interdit.

**21.** Système de commande (1) selon la revendication 20, dans lequel le dispositif de calcul (12) règle, en tant que l'itinéraire interdit, un itinéraire proche d'un itinéraire sur lequel le déplacement d'un autre corps mobile (10) est planifié.

**22.** Système de commande (1) selon la revendication 20 ou 21, dans lequel, lorsqu'au moins une partie de l'itinéraire de transport réglé qui est un itinéraire sur lequel le corps mobile (10) transporte l'objet cible (P) est réglée en tant que l'itinéraire interdit, le dispositif de calcul (12) n'amène pas le corps mobile (10) à commencer à se déplacer avant la libération du réglage de l'itinéraire interdit.

**23.** Méthode de commande comprenant :

l'acquisition, depuis un utilisateur, d'informations de travail désignées qui incluent des informations désignant un objet cible (P) à transporter, des informations désignant une destination de transport de l'objet cible (P), indiquant des détails entrés d'un travail réalisé par un corps mobile (10), de tels détails incluant des informations de l'objet cible (P) déchargé depuis un véhicule V, des informations de la zone de destination de transport AR1 dans laquelle l'objet cible (P) est placé et des informations de l'itinéraire de transport R sur lequel l'objet cible P est transporté ;

la délivrance des informations de travail désignées à un dispositif de calcul (12) ;

le réglage des informations de travail réglées sur la base des informations de travail désignées et la délivrance des informations de travail réglées qui ont été réglées ;

l'acquisition, depuis le dispositif de calcul (12), d'informations de travail réglées qui sont des informations de l'itinéraire de transport réglé (R3) incluant l'itinéraire de transport généré sur la base des informations d'un itinéraire de transport (R2) désigné par l'utilisateur, indiquant les détails du travail réalisé par le corps mobile (10) générés sur la base des informations de travail désignées ;

l'affichage des informations de travail réglées sur une unité d'affichage (74) ; et

le fait d'amener le corps mobile (10) à réaliser le travail sur la base des informations de travail réglées.

24. Programme amenant un ordinateur à exécuter une méthode de commande comprenant :

l'acquisition, depuis un utilisateur, d'informations de travail désignées qui incluent des informations désignant un objet cible (P) à transporter et des informations désignant une destination de transport de l'objet cible (P), indiquant des détails d'un travail réalisé par un corps mobile (10), entrés depuis l'utilisateur ;

la délivrance des informations de travail désignées à un dispositif de calcul (12) ;

le réglage des informations de travail réglées sur la base des informations de travail désignées et la délivrance des informations de travail réglées qui ont été réglées ;

l'acquisition, depuis le dispositif de calcul (12), d'informations de travail réglées qui sont des informations de l'itinéraire de transport réglé (R3) incluant l'itinéraire de transport généré sur la base des informations d'un itinéraire de transport (R2) désigné par l'utilisateur, indiquant les détails du travail réalisé par le corps mobile (10) générés sur la base des informations de travail désignées ;

l'affichage des informations de travail réglées sur une unité d'affichage (74) ; et

le fait d'amener le corps mobile (10) à réaliser le travail sur la base des informations de travail réglées.

FIG. 1

# FIG. 2

12

COMPUTATION DEVICE

30

CONTROL UNIT

40

WORK INFORMATION
ACQUISITION UNIT

42

MOVABLE BODY
SELECTION UNIT

44

PROPOSED WORK INFORMATION
ACQUISITION UNIT

46

EXCLUSIVE CONTROL UNIT

48

OUTPUT UNIT

32

STORAGE UNIT

34

COMMUNICATION UNIT

# FIG. 3

⌐28

**CONTROL DEVICE**

⌐50

**CONTROL UNIT**

⌐60

PROPOSED WORK INFORMATION
ACQUISITION UNIT

⌐61

DESIGNATED WORK INFORMATION
ACQUISITION UNIT

⌐62

SET WORK INFORMATION
ACQUISITION UNIT

⌐64

APPROACH TRAJECTORY
SETTING UNIT

⌐66

OUTPUT UNIT

⌐68

MOVEMENT CONTROL UNIT

⌐52

STORAGE UNIT

⌐54

COMMUNICATION UNIT

# FIG. 4

14

## TERMINAL

70

### CONTROL UNIT

72
INPUT UNIT

74
DISPLAY UNIT

76
STORAGE UNIT

78
COMMUNICATION UNIT

80
DESIGNATED WORK INFORMATION ACQUISITION UNIT

82
SET WORK INFORMATION ACQUISITION UNIT

84
PROPOSED WORK INFORMATION ACQUISITION UNIT

86
RESET REQUEST ACQUISITION UNIT

88
DISPLAY CONTROL UNIT

90
OUTPUT UNIT

# FIG. 5

PROPOSED TRANSPORT ROUTE

FIG. 6

DESIGNATED TRANSPORT ROUTE

FIG. 7

EP 3 904 990 B1

SET TRANSPORT ROUTE

FIG. 8

EP 3 904 990 B1

FIG. 9

DESIGNATED TRANSPORT ROUTE

# FIG. 10

START

| TERMINAL | MOVABLE BODY | COMPUTATION DEVICE |

Yes ← S40
TRAVELING OK?

No → S42
OUTPUT RESET REQUEST

S44
ISSUE NOTIFICATION INDICATING
ACQUISITION OF RESET REQUEST

S18
ACQUIRE, DISPLAY, AND OUTPUT
DESIGNATED TRANSPORT ROUTE

S20
SET AND OUTPUT DESIGNATED
TRANSPORT ROUTE BASED ON
DESIGNATED TRANSPORT ROUTE

S22
DISPLAY SET TRANSPORT ROUTE

S24
No ← DESIGNATED
TRANSPORT ROUTE
ACCEPTED?

Yes → S26
OUTPUT ACCEPTANCE INFORMATION

S28
OUTPUT SET TRANSPORT ROUTE

S30
REGISTER SET TRANSPORT ROUTE

S32
SET PROHIBITED ROUTE

S34a
RESUME TRAVELING

END

# FIG. 11

FIG. 12

FIG. 13

FIG. 14

FIG. 15

EP 3 904 990 B1

FIG. 16

EP 3 904 990 B1

PROPOSED TRANSPORT ROUTE

FIG. 17

EP 3 904 990 B1

DESIGNATED TRANSPORT ROUTE

FIG. 18

EP 3 904 990 B1

FIG. 19

SET TRANSPORT ROUTE

**EP 3 904 990 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017182502 A
- EP 3550392 A